# EUROPEAN PATENT SPECIFICATION

(11) **EP 2 980 247 B1**
(45) Date of publication and mention of the grant of the patent: **18.10.2023**
(21) Application number: 14775492.3
(22) Date of filing: 28.03.2014
(51) Int. Cl.: C21D 9/08, C21D 8/10, C21D 9/00, C22C 38/00, C22C 38/12, C22C 38/14, C22C 38/20, C22C 38/22, C22C 38/24, C22C 38/26, C22C 38/28, C22C 38/32, C22C 38/40, C22C 38/54, C22C 38/04, C22C 38/02, C22C 38/58, C22C 38/06, C22C 38/38, C22C 38/42, C21D 9/14

(54) **METHOD FOR PRODUCING A STEEL STRUCTURE FOR HYDROGEN GAS**
VERFAHREN ZUR HERSTELLUNG EINER STAHLKONSTRUKTION FÜR WASSERSTOFFGAS
PROCÉDÉ DE FABRICATION D'UNE STRUCTURE EN ACIER POUR GAZ HYDROGÈNE

(30) Priority: 29.03.2013 JP 2013075008; 29.03.2013 JP 2013075009; 29.03.2013 JP 2013075010
(43) Date of publication of application: 03.02.2016
(73) Proprietor: JFE Steel Corporation, Tokyo 100-0011 (JP)
(72) Inventor: NAGAO, Akihide, Tokyo 100-0011 (JP); TAKAGI, Shusaku, Tokyo 100-0011 (JP)
(74) Representative: Haseltine Lake Kempner LLP
(86) International application number: PCT/JP2014/001833
(87) International publication number: WO 2014/156188

(56) References cited:
- EP-A1- 0 903 418
- EP-A1- 0 940 476
- EP-A1- 1 354 973
- EP-A1- 1 559 797
- EP-A1- 2 078 764
- EP-A1- 2 233 597
- EP-A1- 2 397 570
- EP-A2- 2 194 153
- JP-A- 2010 018 863
- JP-A- 2010 037 652
- JP-A- 2010 037 655
- JP-A- 2010 222 699
- JP-A- 2012 107 332
- JP-A- 2012 107 332
- JP-A- 2012 107 333
- KR-A- 20090 070 484
- US-A1- 2012 211 128

## Description

### [Technical Field]

The present invention relates to a method for producing a steel structure for hydrogen gas, the structure being a hydrogen storage tank or a hydrogen line pipe, which has high hydrogen embrittlement resistance in a high-pressure hydrogen atmosphere.

### [Background Art]

In recent years, worldwide attention has been focused on hydrogen as a renewable energy source and as an energy source that enables energy diversification to be achieved. In particular, development of fuel-cell vehicles that use high-pressure hydrogen as a fuel source has been strongly anticipated, and studies on the development of fuel-cell vehicles have been carried out all over the world. In some of the studies, a test for practical use has already been conducted.

Fuel-cell vehicles run on hydrogen contained in a tank mounted thereon instead of on gasoline. Thus, in order to spread the use of fuel-cell vehicles, hydrogen stations, at which refueling is performed instead of gas stations, are required. At a hydrogen station, a hydrogen fuel tank mounted on a vehicle is filled with hydrogen supplied from a hydrogen storage tank, which is a vessel for hydrogen in which hydrogen is stored at a high pressure. While the maximum filling pressure of a vehicle-mounted hydrogen tank is currently 35 MPa, it is desired to increase the maximum filling pressure to 70 MPa in order to increase the driving ranges of fuel-cell vehicles to a level comparable to the driving ranges of gasoline vehicles. Thus, it is required to store and supply hydrogen with safety in such a high-pressure hydrogen atmosphere. Accordingly, the pressure in a hydrogen storage tank used in a hydrogen station is currently required to be 40 MPa. If the maximum filling pressure is increased to 70 MPa, the pressure in the hydrogen storage tank used in a hydrogen station would be required to be 80 MPa. In other words, in such a case, the hydrogen storage tank used in a hydrogen station would be subjected to an 80-MPa atmosphere.

However, it is known that entry of hydrogen into a low-alloy steel causes embrittlement (i.e., hydrogen embrittlement) to occur. In the case where the hydrogen pressure is about 15 MPa or less, low-alloy steel plates having a sufficiently large thickness can be used. However, a hydrogen pressure exceeding about 15 MPa increases the risk of hydrogen embrittlement fracture that may occur during service. Therefore, low-alloy steel materials are not used and, for example, austenitic stainless steels such as SUS316L steel, which are less likely to cause hydrogen embrittlement to occur than low-alloy steels, are used instead.

Since steel materials such as SUS316L steel are expensive and have low strengths, a hydrogen storage tank that is designed so as to withstand a hydrogen pressure of 80 MPa needs to have a considerably large thickness, which greatly increases the price of such a hydrogen storage tank. Thus, development of a hydrogen storage tank for hydrogen stations which is capable of withstanding a pressure of 80 MPa at a lower cost has been anticipated.

In order to address the above-described issues, various techniques for using low-alloy steels for producing a high-pressure hydrogen storage tank have been studied. Patent Literature 1 proposes a steel for a high-pressure hydrogen atmosphere in which non-diffusible hydrogen is produced by using a MnS-based or Ca-based inclusion or VC as a hydrogen-trapping site in the steel in order to reduce the risk of embrittlement that may be caused by diffusible hydrogen. Patent Literature 2 and Patent Literature 3 propose a low-alloy high-strength steel having high resistance to high-pressure hydrogen atmosphere embrittlement. The tensile strength of the low-alloy high-strength steel is controlled within a considerably narrow range of 900 to 950 MPa by performing a tempering treatment at a relatively high temperature during quenching and tempering of a Cr-Mo steel. Patent Literature 4 proposes a low-alloy steel for a high-pressure gaseous hydrogen atmosphere in which a V-Mo-based carbide is used for increasing tempering temperature in order to enhance resistance to hydrogen atmosphere embrittlement. Patent Literature 5 proposes a steel for hydrogen storage tank (or high-pressure hydrogen storage vessel) which has high resistance to hydrogen. Large amounts of Mo and V are added to the steel and, during production of steel plates,
stress-relief annealing is performed for long hours after a normalizing treatment to cause a large amount of (Mo,V)C to precipitate. Patent Literature 6 proposes a technique in which the amount of hydrogen entry is reduced by reducing the sizes of cementite particles and thereby the toughness of the base metal is increased in order to reduce the risk of hydrogen embrittlement. Patent Literature 7 proposes a technique in which formation of coarse cementite particles and island-like martensite (i.e., martensite-austenite constituent (MA)) is suppressed and thereby occurrences of hydrogen entry and ductility deterioration are limited in order to reduce the risk of hydrogen embrittlement. The fatigue crack propagation characteristics of ordinary low-alloy steel materials are described in, for example, Non

Patent Literature 1 and Non Patent Literature 2.

### [Citation List]

### [Patent Literature]

[PTL 1] Japanese Unexamined Patent Application Publication No. 2005-2386
[PTL 2] Japanese Unexamined Patent Application Publication No. 2009-46737
[PTL 3] Japanese Unexamined Patent Application Publication No. 2009-275249
[PTL 4] Japanese Unexamined Patent Application Publication No. 2009-74122
[PTL 5] Japanese Unexamined Patent Application Publication No. 2010-37655
[PTL 6] Japanese Unexamined Patent Application Publication No. 2012-107332
[PTL 7] Japanese Unexamined Patent Application Publication No. 2012-107333

### [Non Patent Literature]

[NPL 1] Yoru WADA: "Journal of the Hydrogen Energy Systems Society of Japan", Vol. 35, No. 4 (2010), pp. 38-44
[NPL 2] Taisuke MIYAMOTO et al.: "Transactions of The Japan Society of Mechanical Engineers (Series A)", Vol. 78, No. 788 (2012), pp. 531-546

EP1354973 A1 discloses a high-strength steel sheet, a high-strength pipe and a method for producing the same. EP2078764 A1 discloses a seamless steel tube for airbag accumulators and a process for production thereof. KR 2009-0070484 A discloses a high-strength and high-toughness thick steel plate and a method for producing the same. US2012/211128 A1 discloses a process for manufacturing a part made of steel having a multiphase microstructure. EP0903418 A1 discloses a steel product. EP0940476 A1 discloses a steel product such as a steel pipe.

### [Summary of Invention]

### [Technical Problem]

A hydrogen storage tank, which is used in a particularly high-pressure hydrogen atmosphere, is subjected to a cyclic stress since the storage tank is repeatedly filled with hydrogen, which makes it difficult to achieve a long service life. In order to increase the service life, it is important to reduce fatigue crack propagation rate. However, it has been impossible to reduce fatigue crack propagation rate to a sufficient degree in the above-described techniques of the related art.

Moreover, it is also desirable that steel structures for hydrogen gas such as a hydrogen line pipe for hydrogen pipelines, which have not always been used in a high-pressure hydrogen atmosphere comparable to that in which a hydrogen storage tank is used, have the same degree of safety as the hydrogen storage tank.

The present invention has been developed in light of the above-described fact. An object of the present invention is to provide a method for producing a steel structure for hydrogen gas such as a hydrogen storage tank or a hydrogen line pipe which achieves a lower fatigue crack propagation rate in a high-pressure hydrogen atmosphere than steels used in the related art and has high hydrogen embrittlement resistance.

### [Solution to Problem]

From the above-described viewpoint, the inventors of the present invention have conducted extensive studies of the hydrogen embrittlement resistances of steel structures for hydrogen gas having various microstructures in a high-pressure hydrogen gas. As a result, the inventors have found that a steel structure for hydrogen gas which has a steel microstructure including any one of bainite, martensite, and pearlite with the balance being substantially ferrite may have higher hydrogen embrittlement resistance in high-pressure hydrogen gas than the materials used in the related art which have a single-phase microstructure and thereby a steel structure for hydrogen gas such as a hydrogen storage tank or a hydrogen line pipe which has high hydrogen embrittlement resistance may be produced.

Specifically, the inventors of the present invention have found that a steel structure for hydrogen gas which has a steel microstructure including a predetermined amount of bainite with the balance being substantially ferrite may achieve higher hydrogen embrittlement resistance in high-pressure hydrogen gas than the materials used in the related art which have a single-phase microstructure and have high hydrogen embrittlement resistance. Note that the expression "steel microstructure including a predetermined amount of bainite with the balance being substantially ferrite" means that the steel microstructure is a dual-phase microstructure substantially composed of ferrite and bainite.

The inventors of the present invention have also found that a steel structure for hydrogen gas which has a steel microstructure including a predetermined amount of martensite with the balance being substantially ferrite may achieve higher hydrogen embrittlement resistance in high-pressure hydrogen gas than the materials used in the related art which have a single-phase microstructure and have high hydrogen embrittlement resistance. Note that the expression "steel microstructure including a predetermined amount of martensite with the balance being substantially ferrite" means that the steel microstructure is a dual-phase microstructure substantially composed of ferrite and martensite.

The inventors of the present invention have further found that a steel structure for hydrogen gas which has a steel microstructure including a predetermined amount of pearlite with the balance being substantially ferrite may achieve higher hydrogen embrittlement resistance in high-pressure hydrogen gas than the materials used in the related art which have a single-phase microstructure and have high hydrogen embrittlement resistance. Note that the expression "steel microstructure including a predetermined amount of pearlite with the balance being substantially ferrite" means that the steel microstructure is a dual-phase microstructure substantially composed of ferrite and pearlite.

The inventors of the present invention have conducted further studies on the basis of the above-described findings. Thus, the present invention was made. The summary of the present invention is described below.

A method for producing a steel structure for hydrogen gas, the steel structure being a hydrogen line, and a method for producing a steel structure for hydrogen gas, the steel structure being a hydrogen storage tank, according to the present invention are defined in the independent claims 1 and 2, respectively.

### [Advantageous Effects of Invention]

According to the present invention, a steel structure for hydrogen gas such as a hydrogen storage tank or a hydrogen line pipe which has markedly higher hydrogen embrittlement resistance in high-pressure hydrogen gas than those of the related art may be produced, which is highly advantageous from an industrial viewpoint.

### [Description of Embodiments]

The present invention is described specifically below.

The steel structure for hydrogen gas described herein has a steel microstructure including any one of 10% to 95% of bainite on an area-ratio basis, 10% to 95% of martensite on an area-ratio basis, and 10% to 95% of pearlite on an area-ratio basis, with the balance being substantially ferrite. In other words, the steel structure for hydrogen gas described herein has any one of the following: a steel microstructure including 10% to 95% of bainite on an area-ratio basis with the balance being substantially ferrite; a steel microstructure including 10% to 95% of martensite on an area-ratio basis with the balance being substantially ferrite; and a steel microstructure including 10% to 95% of pearlite on an area-ratio basis with the balance being substantially ferrite. According to the invention the steel structure comprises a steel microstructure wherein 30% to 70% bainite on an area-ratio basis with the balance being ferrite in such a manner that the total area ratio of bainite and ferrite is 98% or more.

The steel microstructure of the steel structure for hydrogen gas described herein is a dual-phase microstructure substantially composed of soft ferrite and any one of bainite, martensite, and pearlite, which are hard phases. The soft ferrite and the bainite are dispersed in the steel microstructure of the steel structure for hydrogen gas according to the method of the present invention. Fatigue cracks stagnate, divert, and/or split at the interface therebetween, which reduces fatigue crack propagation rate and enables high hydrogen embrittlement resistance to be achieved.

In the present invention, microstructure fraction may be determined, for example, in the following manner. Nital etching is performed in order to cause a microstructure to appear. An image of the microstructure is captured using an optical microscope or an SEM (scanning electron microscope). Each microstructure is identified using the image, and the area ratio of the microstructure is calculated.

The term "steel structure for hydrogen gas having high hydrogen embrittlement resistance in high-pressure hydrogen gas" used herein refers to a steel structure for hydrogen gas which has a fatigue crack propagation rate of 1.0 × 10⁻⁶ (m/cycle) or less at a stress intensity factor range ΔK of 25 (MPa·m^{1/2}) as described below. The steel structure for hydrogen gas produced by the methods according to the invention are a hydrogen storage tank and a hydrogen line pipe.

The hydrogen storage tank, which is the steel structure for hydrogen gas produced according to the method of the present invention, is a storage tank used in, for example, a hydrogen station as described above. Examples of such a storage tank include storage tanks composed of only the Type-1 steel material and storage tanks composed of the Type-2 or Type-3 steel material wrapped with carbon fiber reinforced plastic (CFRP). The terms "Type-1", "Type-2", and "Type-3" used herein refer to the classification of the structures of vessels described in standards pertaining to compressed natural gas vehicle fuel containers, ISO11439, ANSI (American National Standards Institute)/NGV (Natural Gas Vehicle), Container Safety Rules-Exemplified Standard-Appendix-9 of High Pressure Gas Safety Act, and the like. The pressure of hydrogen stored in the vessel is about 35 MPa or about 70 MPa. Examples of the hydrogen line pipe, which is the steel structure for hydrogen gas according to the method of the present invention, include a seamless steel line pipe and an UOE steel line pipe. The hydrogen pressure is 5 MPa or more.

The present invention is described specifically below for steel microstructures of the structure for hydrogen gas, that is, 1) bainite and ferrite. Also described herein is for steel microstructures for 2) martensite and ferrite, and 3) pearlite and ferrite, which are not covered by the claimed invention.

### 1) Steel Microstructure Including Bainite with Balance Being Substantially Ferrite

One of steel microstructures of the steel structure for hydrogen gas according to the method of the present invention is a steel microstructure including 30% to 70% of bainite on an area-ratio basis with the balance being substantially ferrite. This steel microstructure of the steel structure for hydrogen gas according to the method of the present invention is a steel microstructure in which soft ferrite and hard bainite are dispersed. In the steel structure for hydrogen gas according to the method of the present invention, fatigue cracks stagnate, divert, and/or split in the vicinity of the interface between the dispersed soft ferrite and hard bainite, which reduces fatigue crack propagation rate and enables high hydrogen embrittlement resistance to be achieved. The term "soft ferrite" used herein refers to polygonal ferrite having a microstructure having a hardness value of about 70 to 150 HV10, and the term "hard bainite" used herein refers to either upper bainite (Type BI, BII, or BIII) or lower bainite having a microstructure having a hardness value of about 150 to 300 HV10. The term "HV10" refers to a Vickers hardness measured at a testing force of 98 N in accordance with JIS Z2244:2009 "Vickers hardness test-Test method".

The above-described effect becomes apparent when the area ratio of a bainite microstructure to the entire microstructure is 30% to 70% and the balance is basically composed of ferrite, that is, when the steel microstructure is a dual-phase microstructure primarily composed of ferrite and bainite. Thus, in the method of the present invention, the steel structure for hydrogen gas has a steel microstructure including 30% to 70% of a bainite microstructure on an area-ratio basis with the balance being substantially a ferrite microstructure. Further preferably, the area ratio of bainite is 40% to 60%. The fatigue crack propagation rate becomes the lowest when the area ratios of the ferrite microstructure and the bainite microstructure are substantially equal to each other. Specifically, the fatigue crack propagation rate becomes the lowest when the proportion of the area ratio of the bainite microstructure in the total area ratio of the ferrite microstructure and the bainite microstructure, that is, namely, a bainite-area-ratio proportion [Bainite-Area-Ratio Proportion: (Area Ratio of Bainite Microstructure)/((Area Ratio of Ferrite Microstructure) + (Area Ratio of Bainite Microstructure))], is 0.3 to 0.7. Thus, the bainite-area-ratio proportion is preferably 0.3 to 0.7 and is more preferably 0.4 to 0.6. Although the balance other than the bainite microstructure is substantially ferrite, microstructures other than bainite or ferrite (e.g., pearlite and martensite) may be included in such a manner that the total area ratio of the other microstructures is 2% or less. This is because the advantageous effects of the present invention are not substantially impaired when the total area ratio of the other microstructures is 2% or less. In other words, the other microstructures may be included in such a manner that the total area ratio of bainite and ferrite is 98% or more.

A preferable steel composition of the steel structure for hydrogen gas according to the method of the present invention, which has the above-described steel microstructure including 30% to 70% of bainite on an area-ratio basis with the balance being substantially ferrite, is described below. Hereinafter, the notation of "%" regarding compositions represents "% by mass" unless otherwise specified.

### C: 0.05% to 0.20%

Carbon (C) is added to a steel in order to ensure adequate hardenability. However, this effect may become insufficient if the C content is less than 0.05%. Accordingly, the C content is set to 0.05% or more and is preferably set to 0.08% or more. In particular, in order to facilitate achieving the above-described area ratio of bainite, the C content is preferably set to 0.10% or more. However, if the C content exceeds 0.20%, the toughness of a base metal and the toughness of a weld heat-affected zone may become reduced and weldability may be significantly degraded. Accordingly, the C content is set to 0.20% or less and is preferably set to 0.17% or less. In particular, in order to facilitate achieving the above-described area ratio of bainite, the C content is preferably set to 0.15% or less. Thus, the C content is limited to 0.05% to 0.20%.

### Si: 0.05% to 0.50%

Silicon (Si) is added to a steel as an element that serves as a deoxidizer in a steelmaking process and that ensures certain hardenability. However, the effect may become insufficient if the Si content is less than 0.05%. Accordingly, the Si content is set to 0.05% or more and is preferably set to 0.08% or more. In particular, in order to facilitate achieving the above-described area ratio of bainite, the Si content is preferably set to 0.10% or more. However, if the Si content exceeds 0.50%, embrittlement of grain boundaries may occur, which leads to a reduction in low-temperature toughness. Accordingly, the Si content is set to 0.50% or less and is preferably set to 0.45% or less. In particular, in order to facilitate achieving the above-described area ratio of bainite, the Si content is preferably set to 0.40% or less. Thus, the Si content is limited to 0.05% to 0.50%.

### Mn: 0.5% to 2.0%

Manganese (Mn) is added to a steel as an element that ensures certain hardenability. However, this effect may become insufficient if the Mn content is less than 0.5%. Accordingly, the Mn content is set to 0.5% or more and is preferably set to 0.8% or more. In particular, in order to facilitate achieving the above-described area ratio of bainite, the Mn content is preferably set to 1.0% or more. However, a Mn content exceeding 2.0% may reduce grain boundary strength, which leads to a reduction in low-temperature toughness. Accordingly, the Mn content is set to 2.0% or less and is preferably set to 1.8% or less. In particular, in order to facilitate achieving the above-described area ratio of bainite, the Mn content is preferably set to 1.5% or less. Thus, the Mn content is limited to 0.5% to 2.0%.

### Al: 0.01% to 0.10%

Aluminium (Al) is added to a steel as a deoxidizer. Al also forms a fine precipitate of an Al-based nitride, which causes pinning of austenite grains to occur during heating and thereby limits coarsening of the grains. However, these effects may become insufficient if the Al content is less than 0.01%. Accordingly, the Al content is set to 0.01% or more and is preferably set to 0.02% or more. However, an Al content exceeding 0.10% may increase the risk of formation of surface flaws in a steel plate. Accordingly, the Al content is set to 0.10% or less and is preferably set to 0.08% or less. Thus, the Al content is limited to 0.01% to 0.10%.

### N: 0.0005% to 0.008%

Nitrogen (N) is added to a steel because it reacts with Nb, Ti, Al, or the like to form a nitride and then forms a fine precipitate, which causes pinning of austenite grains to occur during heating and thereby limits coarsening of the grains. This leads to an increase in low-temperature toughness. However, if the N content is less than 0.0005%, the sizes of microstructures may fail to be reduced to a sufficient degree. Accordingly, the N content is set to 0.0005% or more and is preferably set to 0.002% or more. However, a N content exceeding 0.008% may increase the amount of dissolved N, which reduces the toughness of a base metal and the toughness of a weld heat-affected zone. Accordingly, the N content is set to 0.008% or less and is preferably set to 0.006% or less. Thus, the N content is limited to 0.0005% to 0.008%.

### P: 0.05% or Less

Phosphorus (P), which is an impurity element, is likely to segregate at grain boundaries. A P content exceeding 0.05% may reduce the grain boundary strength of adjacent grains, which leads to a reduction in low-temperature toughness. Thus, the P content is limited to 0.05% or less and is preferably set to 0.03% or less.

### S: 0.01% or Less

Sulfur (S), which is an impurity element, is likely to segregate at grain boundaries and is likely to form MnS, which is a nonmetallic inclusion. A S content exceeding 0.01% may reduce the grain boundary strength of adjacent grains and increase the amount of inclusion, which leads to a reduction in low-temperature toughness. Thus, the S content is limited to 0.01% or less and is preferably set to 0.005% or less.

### O: 0.01% or Less

Oxygen (O) reacts with Al or the like to form an oxide and thereby affects ease of shaping materials. An O content exceeding 0.01% may increase the amount of inclusion and reduce the ease of shaping. Thus, the O content is limited to 0.01% or less and is preferably set to 0.006% or less.

### 2) Steel Microstructure Including Martensite with Balance Being Substantially Ferrite (not covered by the claimed invention)

One of steel microstructures of the steel structure for hydrogen gas described herein is a steel microstructure including 10% to 95% of martensite on an area-ratio basis with the balance being substantially ferrite. This steel microstructure of the steel structure for hydrogen gas described herein is a steel microstructure in which soft ferrite and hard martensite are dispersed. In the steel structure for hydrogen gas described herein, fatigue cracks stagnate, divert, and/or split in the vicinity of the interface between the dispersed soft ferrite and hard martensite, which reduces fatigue crack propagation rate and enables high hydrogen embrittlement resistance to be achieved. The term "soft ferrite" used herein refers to polygonal ferrite having a microstructure having a hardness value of about 70 to 150 HV10, and the term "hard martensite" used herein refers to a microstructure having a hardness value of about 200 to 600 HV10 which may, but does not necessarily, include cementite.

The above-described effect becomes apparent when the area ratio of a martensite microstructure to the entire microstructure is 10% to 95% and the balance is basically composed of ferrite, that is, when the steel microstructure is a dual-phase microstructure primarily composed of ferrite and martensite. Thus, the steel structure for hydrogen gas has a steel microstructure including 10% to 95% of a martensite microstructure on an area-ratio basis with the balance being substantially a ferrite microstructure. The area ratio of martensite is preferably 20% to 95% and is more preferably 25% to 95%. The area ratio of martensite is further preferably 30% to 70%. Further preferably, the area ratio of martensite is 40% to 60%. The fatigue crack propagation rate becomes the lowest when the area ratios of the ferrite microstructure and the martensite microstructure are substantially equal to each other. In other words, the fatigue crack propagation rate becomes the lowest when the proportion of the area ratio of the martensite microstructure in the total area ratio of the ferrite microstructure and the martensite microstructure, that is, namely, a martensite-area-ratio proportion [Martensite-Area-Ratio Proportion: (Area Ratio of Martensite Microstructure)/((Area Ratio of Ferrite Microstructure) + (Area Ratio of Martensite Microstructure))], is 0.3 to 0.7. Thus, the martensite-area-ratio proportion is preferably 0.3 to 0.7 and is more preferably 0.4 to 0.6. Although the balance other than the martensite microstructure is substantially ferrite, microstructures other than martensite or ferrite (e.g., pearlite and bainite) may be included in such a manner that the total area ratio of the other microstructures is 2% or less. This is because the advantageous effects described herein are not impaired when the total area ratio of the other microstructures is 2% or less. In other words, the other microstructures may be included in such a manner that the total area ratio of martensite and ferrite is 98% or more.

A preferable steel composition of the steel structure for hydrogen gas described herein, which has the above-described steel microstructure including 10% to 95% of martensite on an area-ratio basis with the balance being substantially ferrite, is described below. As described above, the notation of "%" regarding compositions represents "% by mass" unless otherwise specified.

### C: 0.05% to 0.35%

Carbon (C) is added to a steel in order to ensure adequate hardenability. However, this effect may become insufficient if the C content is less than 0.05%. Accordingly, the C content is set to 0.05% or more and is preferably set to 0.08% or more. In particular, in order to facilitate achieving the above-described area ratio of martensite, the C content is preferably set to 0.10% or more. However, if the C content exceeds 0.35%, the toughness of a base metal and the toughness of a weld heat-affected zone may become reduced and weldability may be significantly degraded. Accordingly, the C content is set to 0.35% or less and is preferably set to 0.27% or less. In particular, in order to facilitate achieving the above-described area ratio of martensite, the C content is preferably set to 0.25% or less. Thus, the C content is limited to 0.05% to 0.35%.

### Si: 0.05% to 0.50%

Silicon (Si) is added to a steel as an element that serves as a deoxidizer in a steelmaking process and that ensures certain hardenability. However, the effect may become insufficient if the Si content is less than 0.05%. Accordingly, the Si content is set to 0.05% or more and is preferably set to 0.08% or more. In particular, in order to facilitate achieving the above-described area ratio of martensite, the Si content is preferably set to 0.10% or more. However, if the Si content exceeds 0.50%, embrittlement of grain boundaries may occur, which leads to a reduction in low-temperature toughness. Accordingly, the Si content is set to 0.50% or less and is preferably set to 0.45% or less. In particular, in order to facilitate achieving the above-described area ratio of martensite, the Si content is preferably set to 0.40% or less. Thus, the Si content is limited to 0.05% to 0.50%.

### Mn: 0.5% to 2.0%

Manganese (Mn) is added to a steel as an element that ensures certain hardenability. However, this effect may become insufficient if the Mn content is less than 0.5%. Accordingly, the Mn content is set to 0.5% or more and is preferably set to 0.8% or more. In particular, in order to facilitate achieving the above-described area ratio of martensite, the Mn content is preferably set to 1.0% or more. However, a Mn content exceeding 2.0% may reduce grain boundary strength, which leads to a reduction in low-temperature toughness. Accordingly, the Mn content is set to 2.0% or less and is preferably set to 1.8% or less. In particular, in order to facilitate achieving the above-described area ratio of martensite, the Mn content is preferably set to 1.5% or less. Thus, the Mn content is limited to 0.5% to 2.0%.

### Al: 0.01% to 0.10%

Aluminium (Al) is added to a steel as a deoxidizer. Al also forms a fine precipitate of an Al-based nitride, which causes pinning of austenite grains to occur during heating and thereby limits coarsening of the grains. However, these effects may become insufficient if the Al content is less than 0.01%. Accordingly, the Al content is set to 0.01% or more and is preferably set to 0.02% or more. However, an Al content exceeding 0.10% may increase the risk of formation of surface flaws in a steel plate. Accordingly, the Al content is set to 0.10% or less and is preferably set to 0.08% or less. Thus, the Al content is limited to 0.01% to 0.10%.

### N: 0.0005% to 0.008%

Nitrogen (N) is added to a steel because it reacts with Nb, Ti, Al, or the like to form a nitride and then forms a fine precipitate, which causes pinning of austenite grains to occur during heating and thereby limits coarsening of the grains. This leads to an increase in low-temperature toughness. However, if the N content is less than 0.0005%, the sizes of microstructures may fail to be reduced to a sufficient degree. Accordingly, the N content is set to 0.0005% or more and is preferably set to 0.002% or more. However, a N content exceeding 0.008% may increase the amount of dissolved N, which reduces the toughness of a base metal and the toughness of a weld heat-affected zone. Accordingly, the N content is set to 0.008% or less and is preferably set to 0.006% or less. Thus, the N content is limited to 0.0005% to 0.008%.

### P: 0.05% or Less

Phosphorus (P), which is an impurity element, is likely to segregate at grain boundaries. A P content exceeding 0.05% may reduce the grain boundary strength of adjacent grains, which leads to a reduction in low-temperature toughness. Thus, the P content is limited to 0.05% or less and is preferably set to 0.03% or less.

### S: 0.01% or Less

Sulfur (S), which is an impurity element, is likely to segregate at grain boundaries and is likely to form MnS, which is a nonmetallic inclusion. A S content exceeding 0.01% may reduce the grain boundary strength of adjacent grains and increase the amount of inclusion, which leads to a reduction in low-temperature toughness. Thus, the S content is limited to 0.01% or less and is preferably set to 0.005% or less.

### O: 0.01% or Less

Oxygen (O) reacts with Al or the like to form an oxide and thereby affects ease of shaping materials. An O content exceeding 0.01% may increase the amount of inclusion and reduce the ease of shaping. Thus, the O content is limited to 0.01% or less and is preferably set to 0.006% or less.

### 3) Steel Microstructure Including Pearlite with Balance Being Substantially Ferrite (not covered by the claimed invention)

One of steel microstructures of the steel structure for hydrogen gas described herein is a steel microstructure including 10% to 95% of pearlite on an area-ratio basis with the balance being substantially ferrite. This steel microstructure of the steel structure for hydrogen gas described herein is a steel microstructure in which soft ferrite and hard pearlite are dispersed. In the steel structure for hydrogen gas described herein, fatigue cracks stagnate, divert, and/or split in the vicinity of the interface between the dispersed soft ferrite and hard pearlite, which reduces fatigue crack propagation rate and enables high hydrogen embrittlement resistance to be achieved. The term "soft ferrite" used herein refers to polygonal ferrite having a microstructure having a hardness value of about 70 to 150 HV10, and the term "hard pearlite" used herein refers to a microstructure having a hardness value of about 150 to 300 HV10, in which ferrite and pearlite form a lamellar structure or pearlite is dispersed in ferrite in clusters.

The above-described effect becomes apparent when the area ratio of a pearlite microstructure to the entire microstructure is 10% to 95% and the balance is basically composed of ferrite, that is, when the steel microstructure is a dual-phase microstructure primarily composed of ferrite and pearlite. Thus, the steel structure for hydrogen gas has a steel microstructure including 10% to 95% of a pearlite microstructure on an area-ratio basis with the balance being substantially a ferrite microstructure. The area ratio of pearlite is preferably 20% to 95% and is more preferably 25% to 95%. The area ratio of pearlite is further preferably 30% to 70%. Further preferably, the area ratio of pearlite is 40% to 60%. The fatigue crack propagation rate becomes the lowest when the area ratios of the ferrite microstructure and the pearlite microstructure are substantially equal to each other. In other words, the fatigue crack propagation rate becomes the lowest when the proportion of the area ratio of the pearlite microstructure in the total area ratio of the ferrite microstructure and the pearlite microstructure, that is, namely, a pearlite-area-ratio proportion [Pearlite-Area-Ratio Proportion: (Area Ratio of Pearlite Microstructure)/((Area Ratio of Ferrite Microstructure) + (Area Ratio of Pearlite Microstructure))], is 0.3 to 0.7. Thus, the pearlite-area-ratio proportion is preferably 0.3 to 0.7 and is more preferably 0.4 to 0.6. Although the balance other than the pearlite microstructure is substantially ferrite, microstructures other than pearlite or ferrite (e.g., bainite and martensite) may be included in such a manner that the total area ratio of the other microstructures is 2% or less. This is because the advantageous effects described herein are not impaired when the total area ratio of the other microstructures is 2% or less. In other words, the other microstructures may be included in such a manner that the total area ratio of pearlite and ferrite is 98% or more.

A preferable steel composition of the steel structure for hydrogen gas described herein, which has the above-described steel microstructure including 10% to 95% of pearlite on an area-ratio basis with the balance being substantially ferrite, is described below. As described above, the notation of "%" regarding compositions represents "% by mass" unless otherwise specified.

### C: 0.05% to 0.10%

Carbon (C) is added to a steel in order to ensure adequate hardenability. However, this effect may become insufficient if the C content is less than 0.05%. Accordingly, the C content is set to 0.05% or more and is preferably set to 0.06% or more. In particular, in order to facilitate achieving the above-described area ratio of pearlite, the C content is preferably set to 0.07% or more. However, if the C content exceeds 0.10%, the toughness of a base metal and the toughness of a weld heat-affected zone may become reduced and weldability may be significantly degraded. Accordingly, the C content is set to 0.10% or less and is preferably set to 0.09% or less. In particular, in order to facilitate achieving the above-described area ratio of pearlite, the C content is preferably set to 0.08% or less. Thus, the C content is limited to 0.05% to 0.10%.

### Si: 0.05% to 0.50%

Silicon (Si) is added to a steel as an element that serves as a deoxidizer in a steelmaking process and that ensures certain hardenability. However, the effect may become insufficient if the Si content is less than 0.05%. Accordingly, the Si content is set to 0.05% or more and is preferably set to 0.08% or more. In particular, in order to facilitate achieving the above-described area ratio of pearlite, the Si content is preferably set to 0.10% or more. However, if the Si content exceeds 0.50%, embrittlement of grain boundaries may occur, which leads to a reduction in low-temperature toughness. Accordingly, the Si content is set to 0.50% or less and is preferably set to 0.45% or less. In particular, in order to facilitate achieving the above-described area ratio of pearlite, the Si content is preferably set to 0.40% or less. Thus, the Si content is limited to 0.05% to 0.50%.

### Mn: 0.5% to 2.0%

Manganese (Mn) is added to a steel as an element that ensures certain hardenability. However, this effect may become insufficient if the Mn content is less than 0.5%. Accordingly, the Mn content is set to 0.5% or more and is preferably set to 0.8% or more. In particular, in order to facilitate achieving the above-described area ratio of pearlite, the Mn content is preferably set to 1.0% or more. However, a Mn content exceeding 2.0% may reduce grain boundary strength, which leads to a reduction in low-temperature toughness. Accordingly, the Mn content is set to 2.0% or less and is preferably set to 1.8% or less. In particular, in order to facilitate achieving the above-described area ratio of pearlite, the Mn content is preferably set to 1.5% or less. Thus, the Mn content is limited to 0.5% to 2.0%.

### Al: 0.01% to 0.10%

Aluminium (Al) is added to a steel as a deoxidizer. Al also forms a fine precipitate of an Al-based nitride, which causes pinning of austenite grains to occur during heating and thereby limits coarsening of the grains. However, these effects may become insufficient if the Al content is less than 0.01%. Accordingly, the Al content is set to 0.01% or more and is preferably set to 0.02% or more. However, an Al content exceeding 0.10% may increase the risk of formation of surface flaws in a steel plate. Accordingly, the Al content is set to 0.10% or less and is preferably set to 0.08% or less. Thus, the Al content is limited to 0.01% to 0.10%.

### N: 0.0005% to 0.008%

Nitrogen (N) is added to a steel because it reacts with Nb, Ti, Al, or the like to form a nitride and then forms a fine precipitate, which causes pinning of austenite grains to occur during heating and thereby limits coarsening of the grains. This leads to an increase in low-temperature toughness. However, if the N content is less than 0.0005%, the sizes of microstructures may fail to be reduced to a sufficient degree. Accordingly, the N content is set to 0.0005% or more and is preferably set to 0.002% or more. However, a N content exceeding 0.008% may increase the amount of dissolved N, which reduces the toughness of a base metal and the toughness of a weld heat-affected zone. Accordingly, the N content is set to 0.008% or less and is preferably set to 0.006% or less. Thus, the N content is limited to 0.0005% to 0.008%.

### P: 0.05% or Less

Phosphorus (P), which is an impurity element, is likely to segregate at grain boundaries. A P content exceeding 0.05% may reduce the grain boundary strength of adjacent grains, which leads to a reduction in low-temperature toughness. Thus, the P content is limited to 0.05% or less and is preferably set to 0.03% or less.

### S: 0.01% or Less

Sulfur (S), which is an impurity element, is likely to segregate at grain boundaries and is likely to form MnS, which is a nonmetallic inclusion. A S content exceeding 0.01% may reduce the grain boundary strength of adjacent grains and increase the amount of inclusion, which leads to a reduction in low-temperature toughness. Thus, the S content is limited to 0.01% or less and is preferably set to 0.005% or less.

### O: 0.01% or Less

Oxygen (O) reacts with Al or the like to form an oxide and thereby affects workability of materials. An O content exceeding 0.01% may increase the amount of inclusion and reduce the workability. Thus, the O content is limited to 0.01% or less and is preferably set to 0.006% or less.

The balance of the above-described steel composition is Fe and inevitable impurities in any of the above-described cases: 1) a microstructure includes bainite and ferrite; 2) a microstructure includes martensite and ferrite; and 3) a microstructure includes pearlite and ferrite. Optionally, the components i) and ii) below may be added to a steel alone or in combination appropriately in accordance with desired properties.
i) One or more elements selected from Cu: 0.05% to 1.0%, Ni: 0.05% to 2.0%, Cr: 0.1% to 2.5%, Mo: 0.05% to 2.0%, Nb: 0.005% to 0.1%, V: 0.005% to 0.2%, Ti: 0.005% to 0.1%, W: 0.05% to 2.0%, and B: 0.0005% to 0.005%.
ii) One or more elements selected from Nd: 0.005% to 1.0%, Ca: 0.0005% to 0.005%, Mg: 0.0005% to 0.005%, and REM: 0.0005% to 0.005%.

### Cu: 0.05% to 1.0%

Copper (Cu) enhances hardenability. This effect may become insufficient if the Cu content is less than 0.05%. However, a Cu content exceeding 1.0% may increase the risk of cracking that may occur during hot working when steel slabs are heated or welded. Thus, when Cu is added to a steel, the Cu content is limited to 0.05% or more and 1.0% or less.

### Ni: 0.05% to 2.0%

Nickel (Ni) enhances hardenability similarly to Cu and also increases toughness. These effects may become insufficient if the Ni content is less than 0.05%. However, a Ni content exceeding 2.0% may result in poor economy. Thus, when Ni is added to a steel, the Ni content is limited to 0.05% or more and 2.0% or less.

### Cr: 0.1% to 2.5%

Chromium (Cr) is added to a steel as an element that ensures certain hardenability. This effect may become insufficient if the Cr content is less than 0.1%. However, a Cr content exceeding 2.5% may deteriorate weldability. Thus, when Cr is added to a steel, the Cr content is limited to 0.1% or more and 2.5% or less.

### Mo: 0.05% to 2.0%

Molybdenum (Mo) enhances hardenability. This effect may become insufficient if the Mo content is less than 0.05%. However, a Mo content exceeding 2.0% may results in poor economy. Thus, when Mo is added to a steel, the Mo content is limited to 0.05% or more and 2.0% or less.

### Nb: 0.005% to 0.1%

Niobium (Nb) enhances hardenability and forms a fine precipitate of an Nb-based carbonitride, which causes pinning of austenite grains to occur during heating and thereby limits coarsening of the grains. These effects may become insufficient if the Nb content is less than 0.005%. However, an Nb content exceeding 0.1% may reduce the toughness of a weld heat-affected zone. Thus, when Nb is added to a steel, the Nb content is limited to 0.005% or more and 0.1% or less.

### V: 0.005% to 0.2%

Vanadium (V) enhances hardenability and forms a fine precipitate of a V-based carbide, which causes pinning of austenite grains to occur during heating and thereby limits coarsening of the grains. These effects may become insufficient if the V content is less than 0.005%. However, a V content exceeding 0.2% may reduce the toughness of a weld heat-affected zone. Thus, when V is added to a steel, the V content is limited to 0.005% or more and 0.2% or less.

### Ti: 0.005% to 0.1%

Titanium (Ti) enhances hardenability and forms a fine precipitate of a Ti-based carbonitride, which causes pinning of austenite grains to occur during heating and thereby limits coarsening of the grains. These effects may become insufficient if the Ti content is less than 0.005%. However, a Ti content exceeding 0.1% may reduce the toughness of a weld heat-affected zone. Thus, when Ti is added to a steel, the Ti content is limited to 0.005% or more and 0.1% or less.

### W: 0.05% to 2.0%

Tungsten (W) enhances hardenability. This effect may become insufficient if the W content is less than 0.05%. However, a W content exceeding 2.0% may deteriorate weldability. Thus, when W is added to a steel, the W content is limited to 0.05% or more and 2.0% or less.

### B: 0.0005% to 0.005%

Boron (B) is added to a steel as an element that ensures certain hardenability. This effect may become insufficient if the B content is less than 0.0005%. However, a B content exceeding 0.005% may reduce toughness. Thus, when B is added to a steel, the B content is limited to 0.0005% or more and 0.005% or less.

### Nd: 0.005% to 1.0%

Neodymium (Nd) incorporates S as an inclusion, which reduces the amount of S that segregates at grain boundaries and thereby enhances low-temperature toughness and hydrogen embrittlement resistance. This effect may become insufficient if the Nd content is less than 0.005%. However, an Nd content exceeding 1.0% may reduce the toughness of a weld heat-affected zone. Thus, when Nd is added to a steel, the Nd content is limited to 0.005% or more and 1.0% or less.

### Ca: 0.0005% to 0.005%

Calcium (Ca) forms CaS, which causes the form of a sulfide-based inclusion to change from MnS, which is an inclusion that is likely to be extended by rolling, into CaS, which is a spherical inclusion that is less likely to be extended by rolling. This effect may become insufficient if the Ca content is less than 0.0005%. However, a Ca content exceeding 0.005% may deteriorate cleanliness, which results in degradation of material properties such as toughness. Thus, when Ca is added to a steel, the Ca content is limited to 0.0005% or more and 0.005% or less.

### Mg: 0.0005% to 0.005%

Magnesium (Mg) may be used as a hot-metal desulphurization agent. This effect may become insufficient if the Mg content is less than 0.0005%. However, a Mg content exceeding 0.005% may deteriorate cleanliness. Thus, when Mg is added to a steel, the Mg content is limited to 0.0005% or more and 0.005% or less.

### REM: 0.0005% to 0.005%

REM forms a sulfide in a steel in the form of REM(O,S) and thereby reduces the amount of S dissolved at grain boundaries, which enhances resistance to stress-relief cracking. This effect may become insufficient if the REM content is less than 0.0005%. However, a REM content exceeding 0.005% may cause a REM sulfide to significantly accumulate at a sedimental zone, which leads to degradation of material properties. Thus, when REM is added to a steel, the REM content is limited to 0.0005% or more and 0.005% or less. Note that REM is the abbreviation for rare earth metal.

The method for producing a steel structure for hydrogen gas according to the present invention has the above-described steel microstructure and has the above-described composition. The methods for producing the steel structure for hydrogen gas according to the present invention are described below for a hydrogen line pipe and a hydrogen storage tank being the steel structure for hydrogen gas. The method for producing a steel structure for hydrogen gas may comprise a steel structure for hydrogen gas that is any of various steel materials such as a thin sheet, a thick plate, a pipe, a shaped steel, and a steel bar which have the above-described steel microstructure, have the above-described composition, and have high resistance to fatigue crack propagation in high-pressure hydrogen gas. Alternatively, the method for producing a steel structure for hydrogen gas may also comprise a steel structure for hydrogen gas produced by forming any of the above-described steel materials having high resistance to fatigue crack propagation in high-pressure hydrogen gas into a predetermined shape. The claimed invention relates to methods for producing a steel structure for hydrogen gas, wherein the steel structure being a hydrogen line pipe or a hydrogen storage tank. Other steel structures for hydrogen gas do not belong to the claimed invention.

The temperatures specified in the production conditions are measured at the center of a steel material, that is, specifically, the center of the steel material in the thickness direction for a thin sheet, a thick plate, a pipe, and a profile and the center of the steel material in the radial direction for a steel bar.

The hydrogen line pipe, which is the steel structure for hydrogen gas according to the method of the present invention, is produced by hot rolling a steel and subsequently performing direct quenching and tempering.

### Steel material

A steel material used for producing the hydrogen line pipe according to the method of the present invention is produced by casting molten steel having the above-described composition 1. It is not necessary to particularly limit the casting conditions. Various steel materials produced under different casting conditions may be used. A method for producing a cast slab from molten steel and a method for producing a steel slab by hot rolling the cast slab are not particularly specified. Steel materials produced by a converter steelmaking process, an electric steelmaking process, or the like and steel slabs produced by continuous casting, ingot casting, or the like can be used.

### Production by Accelerated Cooling (not according to the claimed invention)

The above-described steel materials is heated to the Acs transformation temperature or more and hot-rolled to a predetermined thickness. Subsequently, accelerated cooling from the Ar₃ transformation temperature or more to 600°C or less at a cooling rate of 5°C/sec. to 20°C/sec. is performed by water cooling or the like. If the heating temperature is less than the Acs transformation temperature, a portion of non-transformed austenite may remain, which results in failure to form a desired steel microstructure after hot rolling and accelerated cooling. Thus, the temperature to which heating is performed before hot rolling is set to the Acs transformation temperature or more. The heating temperature is more preferably set to (Acs + 50)°C or more. The heating temperature is preferably set to 1250°C or less in order to prevent an excessive increase in the diameters of initial austenite grains from occurring and increase the production efficiency. If the temperature at which cooling is started after hot rolling is less than the Ar₃ transformation temperature, transformation of a portion of austenite may occur before cooling is started, which results in failure to forming a desired steel microstructure after accelerated cooling. Thus, cooling is started at the Ar₃ transformation temperature or more after hot rolling. Cooling is preferably started at (Ar₃ + 50)°C or more. The temperature at which cooling is started is preferably set to 1000°C or less in consideration of hot rolling. The rate at which cooling is performed from the Ar₃ transformation temperature or more is set to 5°C/sec. or more and 20°C/sec. or less in order to form a desired microstructure. The cooling rate is an average cooling rate measured at the center of the steel plate in the thickness direction. The cooling rate is preferably set to 5°C/sec. or more and less than 20°C/sec. in order to consistently form a steel microstructure including 10% to 95% of bainite on an area-ratio basis with the balance being substantially ferrite. There are no particular limitations on cooling means. For example, water cooling may be performed. If cooling is stopped at a temperature exceeding 600°C, desired transformation may fail to be completed, which results in failure to form a desired steel microstructure. Thus, accelerated cooling is performed until the temperature reaches 600°C or less and is preferably performed until the temperature reaches 550°C or less. The temperature at which cooling is stopped is preferably set to 300°C or more in consideration of transformation behavior.

### Direct Quenching and Tempering

The above-described steel material is heated to the Acs transformation temperature or more and then hot-rolled. Subsequently, quenching is performed from the Ar₃ transformation temperature or more to 250°C or less at a cooling rate of 5°C/sec. to 20°C/sec, and then tempering is performed at the Ac₁ transformation temperature or less. If the heating temperature is less than the Acs transformation temperature, a portion of non-transformed austenite may remain, which results in failure to form a desired steel microstructure after hot rolling, quenching, and tempering. Thus, the temperature to which heating is performed before hot rolling is set to the Acs transformation temperature or more and is preferably set to (Acs + 50)°C or more. The heating temperature is preferably set to 1250°C or less in order to prevent an excessive increase in the diameters of initial austenite grains from occurring and increase the production efficiency. If the temperature at which quenching is started after hot rolling is less than the Ar₃ transformation temperature, transformation of a portion of austenite may occur before quenching is started, which results in failure to forming a desired steel microstructure after quenching and tempering. Thus, quenching is performed by starting cooling at the Ar₃ transformation temperature or more after hot rolling. Cooling is preferably started at (Ars + 50)°C or more. The temperature at which quenching is started is preferably set to 1000°C or less in consideration of hot rolling. The cooling rate at which quenching is performed from the Ar₃ transformation temperature or more is set to 5°C/sec. or more and 20°C/sec. or less in order to form a desired microstructure. The cooling rate is an average cooling rate measured at the center of the steel plate in the thickness direction. The cooling rate is set to 5°C/sec. or more and less than 20°C/sec. in order to consistently form a steel microstructure including 30% to 70% of bainite on an area-ratio basis with the balance being substantially ferrite. There are no particular limitations on cooling means. For example, water cooling may be performed. If quenching is stopped at a temperature exceeding 250°C, desired transformation may fail to be completed, which results in failure to form a desired steel microstructure after tempering. Thus, quenching is performed until the temperature reaches 250°C or less and is preferably performed until the temperature reaches 200°C or less. The temperature at which quenching is stopped is preferably set to 100°C or more in order to increase production efficiency. After quenching, tempering is performed at the Ac₁ transformation temperature or less. If the tempering temperature exceeds the Ac₁ transformation temperature, a portion of the microstructure may be transformed into austenite, which results in failure to form a desired steel microstructure after tempering. Tempering is preferably performed at (Ac₁ - 20)°C or less. The tempering temperature is preferably set to 300°C or more, for example, in order to recover toughness and the like.

The hydrogen storage tank, which is the steel structure for hydrogen gas according to the method of the present invention, is produced by forming a steel material having a predetermined composition into a predetermined shape, that is, the shape of a desired hydrogen storage tank, and subsequently performing reheating, quenching, and tempering.

### Reheating, Quenching, and Tempering

A steel material having the above-described composition 1 is formed into a predetermined shape, and subsequently heating to the Acs transformation temperature or more, quenching from the Ar₃ transformation temperature or more to 250°C or less at a cooling rate of 5°C/sec. to 20°C/sec, and tempering at the Ac₁ transformation temperature or less are performed. The steel material that is to be heated to the Acs transformation temperature or more may have any composition corresponding to the steel microstructure of a desired hydrogen storage tank, and it is not necessary to particularly specify the steel microstructure of the steel material. If the temperature to which heating is performed after the steel material is formed into a predetermined shape is less than the Acs transformation temperature, a portion of non-transformed austenite may remain, which results in failure to form a desired steel microstructure after quenching and tempering. Thus, the heating temperature is set to the Acs transformation temperature or more and is preferably set to (Acs + 50)°C or more. The heating temperature is preferably set to 1250°C or less in order to prevent an excessive increase in the diameters of initial austenite grains from occurring and increase the production efficiency. If the temperature at which quenching is started after heating is less than the Ar₃ transformation temperature, transformation of a portion of austenite may occur before quenching is started, which results in failure to forming a desired steel microstructure after quenching and tempering. Thus, quenching is performed by starting cooling at the Ar₃ transformation temperature or more after heating. Cooling is preferably started at (Ars + 50)°C or more. The temperature at which quenching is started is preferably set to 1000°C or less in consideration of hot rolling. The cooling rate at which quenching is performed from the Ar₃ transformation temperature or more is set to 5°C/sec. or more and 20°C/sec. or less in order to form a desired microstructure and prevent quench cracking from occurring. The cooling rate is an average cooling rate measured at the center of the steel plate (i.e., wall of the storage tank) in the thickness (i.e., wall thickness) direction. The cooling rate is set to 5°C/sec. or more and less than 20°C/sec. in order to consistently form a steel microstructure including 30% to 70% of bainite on an area-ratio basis with the balance being substantially ferrite. There are no particular limitations on cooling means. For example, oil cooling or water cooling may be performed. If quenching, that is, cooling, is stopped at a temperature exceeding 250°C, desired transformation may fail to be completed, which results in failure to form a desired steel microstructure after tempering. Thus, quenching is performed until the temperature reaches 250°C or less and is preferably performed until the temperature reaches 200°C or less. The temperature at which quenching is stopped is preferably set to 100°C or less in order to increase production efficiency. After quenching, tempering is performed at the Ac₁ transformation temperature or less. If the tempering temperature exceeds the Ac₁ transformation temperature, a portion of the microstructure may be transformed into austenite, which results in failure to form a desired steel microstructure after tempering. The tempering temperature is preferably set to (Ac₁ - 20)°C or less. The tempering temperature is preferably set to 300°C or more, for example, in order to recover toughness and the like.

Although a method for determining the Acs transformation temperature (°C), the Ar₃ transformation temperature (°C), and the Ac₁ transformation temperature (°C) is not particularly specified in the present invention, for example, these transformation temperatures can be calculated using the following equations: Acs = 854 - 180C + 44Si - 14Mn - 17.8Ni - 1.7Cr; Ar₃ = 910 - 310C - 80Mn - 20Cu - 15Cr - 55Ni - 80Mo; and Ac₁ = 723 - 14Mn + 22Si - 14.4Ni + 23.3Cr, where the symbols of elements represent the contents (% by mass) of respective elements in a steel material.

The hydrogen line pipe and hydrogen storage tank, which are the steel structure for hydrogen gas, having a steel microstructure including a predetermined amount of bainite with the balance being substantially ferrite, a steel microstructure including a predetermined amount of martensite with the balance being substantially ferrite , or a steel microstructure including a predetermined amount of pearlite with the balance being substantially ferrite can be produced under the above-described conditions.

### [EXAMPLE 1]

An example in which the advantageous effects of the present invention, that is, specifically, a steel structure for hydrogen gas which has a steel microstructure including bainite with the balance being substantially ferrite, were verified is described below. In this example, a method for producing a steel plate was studied in order to simulate the method for producing a hydrogen line pipe or a method for producing a hydrogen storage tank, and property evaluations of a steel plate were performed in order to simulate the property evaluations of the hydrogen line pipe or the hydrogen storage tank. Specifically, in the case where the production method was accelerated cooling, which is not according to the claimed invention, or direct quenching and tempering, production of the hydrogen line pipe was simulated, and, in the case where reheating, quenching, and tempering were performed, production of the hydrogen storage tank was simulated.

Steels BA to BH having the respective chemical compositions shown in Table 1 (Tables 1-1 and 1-2) were each molten and cast into a slab. Some of the slabs were heated to the respective heating temperatures shown in Table 2 and then hot-rolled. The hot-rolled steels were subjected to accelerated cooling (Steel plate Nos. B1 and B4) or direct quenching and tempering (Steel plate Nos. B2 and B5) by performing water cooling under the respective conditions shown in Table 2 to prepare steel plates. The other slabs were, after casting, temporarily formed into steel plates, which were then quenched by water cooling or oil cooling under the respective conditions shown in Table 2 to prepare steel plates (Steel plate Nos. B3 and B6 to B15). That is, reheating, quenching, and tempering were performed. The temperature of each steel plate was measured using a thermocouple placed into the center of the steel plate in the thickness direction. The cooling rates shown in Table 2, at which water cooling or oil cooling was performed, were 5°C/sec. or more and less than 20°C/sec.

Table 2 summarizes the bainite area ratio, tensile strength, and fatigue crack propagation rate (m/cycle) in 90-MPa high-pressure hydrogen gas at a stress intensity factor range of 25 MPa·m^{1/2} of each steel plate. A material test and evaluation of material properties were conducted in the following manner. In the steel plates shown in Table 2, microstructures other than bainite were principally ferrite, and the total area ratio of microstructures other than bainite or ferrite was 2% or less. The targeted fatigue crack propagation rate was 1.0 × 10⁻⁶ (m/cycle) or less, and it was considered that the steel plate had high hydrogen embrittlement resistance when the targeted rate was achieved.

### (a) Microstructure of Steel plate

A microstructure was caused to appear by performing 3% nital etching. An optical microscope image of a cross section of each steel plate which is parallel to the rolling direction was captured at the 1/4-thickness position at an appropriate magnification of 200 to 400 times. Microstructures were visually distinguished, and the area ratios of the microstructures were determined by an image analysis.

### (b) Tensile Properties

A tensile test conforming to JIS Z2241 was conducted using full-thickness tensile test specimens described in JIS Z2201 (1980), which were taken so that the longitudinal direction (tensile direction) of each specimen was parallel to the rolling direction, in order to make an evaluation.

### (c) Fatigue Crack Propagation Test

A fatigue crack propagation characteristic was examined in the following manner. Compact tension specimens (CT specimes) conforming to ASTM E 647 were taken from the respective steel plates so that the loading direction was parallel to the rolling direction. The lengths of fatigue cracks formed in each specimen were measured by a compliance method using a clip gage, and thereby a fatigue crack propagation rate in 90-MPa high-pressure hydrogen gas was determined. The test specimens were prepared by, when the thickness of the steel plate was 10 mm or less, grinding the both surfaces of the steel plate by 0.5 mm so that test specimens having thicknesses of 2 mm, 5 mm, 8 mm, and 9 mm were prepared. When the thickness of the steel plate was other than the above-described thickness, that is, more than 10 mm, a test specimen having a thickness of 10 mm was taken at the t/2 (t: plate thickness) position. Both sides of each test specimen were subjected to mirror polishing. A fatigue crack propagation rate (m/cycle) at a stress intensity factor range ΔK of 25 (MPa·m^{1/2}) , which is a stable growth region in which Paris' law holds, was used as a representative value for evaluation. The targeted fatigue crack propagation rate was 1.0 × 10⁻⁶ (m/cycle) or less.

Steel plate Nos. B8, B11, and B14 shown in Table 2, which satisfy all of the requirements for chemical composition and production conditions according to the present invention, had a dual-phase microstructure primarily composed of ferrite and bainite, and the area ratio of bainite fell within the range of the present invention. As summarized in Table 2, these steel plates had a fatigue crack propagation rate of 1.0 × 10⁻⁶ (m/cycle) or less, which confirms that these steel plates had high hydrogen embrittlement resistance in high-pressure hydrogen gas. Steel plates Nos. B1-B6 are outside of the claimed invention.

On the other hand, in Steel plate No. B7, where the heating temperature was lower than the lower limit of the range of the present invention (i.e., Acs), both the targeted bainite area ratio and the targeted fatigue crack propagation rate were not achieved. In Steel plate Nos. B9 and B12, where the cooling start temperature (i.e., temperature at which water cooling or oil cooling was started) was lower than the lower limit of the range of the present invention (i.e., Ar₃), that is, out of the range of the present invention, both the targeted bainite area ratio and the targeted fatigue crack propagation rate were not achieved. In Steel plate Nos. B10 and B13, where the cooling stop temperature (i.e., temperature at which water cooling or oil cooling was stopped) was higher than the upper limit of the range of the present invention (i.e., 250°C), that is, out of the range of the present invention, both the targeted bainite area ratio and the targeted fatigue crack propagation rate were not achieved. In Steel plate No. B15, where the tempering temperature was higher than the upper limit of the range of the present invention (i.e., Ac₁), that is, out of the range of the present invention, both the desired bainite area ratio and the desired fatigue crack propagation rate were not achieved. However, Steel plate Nos. B7, B9, B10, B12, B13, and B15, which are shown as comparative examples, also had a dual-phase microstructure primarily composed of ferrite and bainite.

As is clear from the above-described results, in Invention examples, the fatigue crack propagation rate was 1.0 × 10⁻⁶ (m/cycle) or less and a good hydrogen embrittlement characteristic was achieved. This confirms that a steel structure for hydrogen gas such as a hydrogen storage tank or a hydrogen line pipe which has high hydrogen embrittlement resistance can be produced.

### [Table 1-1]

**Table 1-1**

| Steel type | Composition (mass%) | | | | | | | |
|---|---|---|---|---|---|---|---|---|
| | C | Si | Mn | Al | N | P | S | O |
| BA | 0.05 | 0.17 | 0.67 | 0.031 | 0.0032 | 0.008 | 0.0032 | 0.0032 |
| BB | 0.07 | 0.25 | 1.01 | 0.035 | 0.0036 | 0.015 | 0.0041 | 0.0052 |
| BC | 0.05 | 0.19 | 0.72 | 0.027 | 0.0033 | 0.009 | 0.0015 | 0.0029 |
| BD | 0.06 | 0.31 | 0.88 | 0.031 | 0.0035 | 0.005 | 0.0011 | 0.0033 |
| BE | 0.08 | 0.21 | 0.59 | 0.034 | 0.0038 | 0.007 | 0.0024 | 0.0035 |
| BF | 0.12 | 0.31 | 0.72 | 0.063 | 0.0031 | 0.004 | 0.0013 | 0.0042 |
| BG | 0.15 | 0.42 | 1.12 | 0.030 | 0.0035 | 0.012 | 0.0008 | 0.0028 |
| BH | 0.19 | 0.45 | 1.71 | 0.063 | 0.0036 | 0.018 | 0.0023 | 0.0042 |

### [Table 1-2]

**Table 1-2**

| Steel type | Composition (mass%) | | | | | | | | | | | | | Ac₃ (°C) | Ar₃ (°C) | Ac₁ (°C) |
|---|---|---|---|---|---|---|---|---|---|---|---|---|---|---|---|---|
| | Cu | Ni | Cr | Mo | Nb | V | Ti | B | Nd | W | Ca | Mg | REM | | | |
| BA | - | - | - | - | - | - | - | - | - | - | - | - | - | 843 | 841 | 717 |
| BB | - | - | - | - | - | - | - | - | - | - | - | - | - | 838 | 808 | 714 |
| BC | - | - | 0.77 | - | 0.018 | - | 0.012 | - | - | - | - | - | - | 842 | 825 | 735 |
| BD | - | - | 0.52 | 0.12 | - | 0.047 | 0.011 | - | - | - | - | - | - | 844 | 804 | 730 |
| BE | - | - | 0.86 | 0.47 | 0.028 | 0.038 | 0.007 | - | - | - | - | - | - | 839 | 788 | 739 |
| BF | - | - | 0.79 | 0.26 | 0.016 | 0.052 | - | - | - | - | - | - | - | 835 | 783 | 738 |
| BG | 0.71 | 1.15 | 0.63 | 0.35 | 0.022 | 0.028 | 0.012 | - | - | - | - | - | - | 808 | 659 | 715 |
| BH | - | - | 1.52 | 0.51 | 0.024 | 0.064 | 0.015 | 0.0008 | 0.011 | 0.08 | 0.0006 | 0.0005 | 0.0007 | 813 | 651 | 744 |

| | | | | | | | | | | | | | | | | |
|---|---|---|---|---|---|---|---|---|---|---|---|---|---|---|---|---|
| Note 1: Ac₃(°C)=854-180C+44Si-14Mn-17.8Ni-1.7Cr, where the symbols of elements represent the contents (mass%) of the respective elements. Note 2: Ar₃(°C)=910-310C-80Mn-20Cu-15Cr-55Ni-80Mo, where the symbols of elements represent the contents (mass%) of the respective elements. Note 3: Ac,(°C)=723-14Mn+22Si-14.4Ni+23.3Cr, where the symbols of elements represent the contents (mass%) of the respective elements. | | | | | | | | | | | | | | | | |

### [Table 2]

**Table 2**

| Steel plate No. | Steel type | Thickness (mm) | Production method | Heating temperature (°C) | Water-cooling start temperature (°C) | Water-cooling stop temperature (°C) | Oil-cooling start temperature (°C) | Oil-cooling stop temperature (°C) | Tempering temperature (°C) | Bainite area ratio (%) | Tensile strength (MPa) | Fatigue crack propagation rate (m/cycle) | Remark |
|---|---|---|---|---|---|---|---|---|---|---|---|---|---|
| B1 | BA | 3 | Accelerated cooling | 1100 | 900 | 550 | - | - | - | 14 | 338 | 0.02 × 10⁻⁶ | Reference example |
| B2 | BB | 6 | Direct quenching and tempering | 1100 | 900 | 200 | - | - | 650 | 23 | 354 | 0.03 × 10⁻⁶ | Reference example |
| B3 | BB | 6 | Reheating, quenching, and tempering | 920 | 850 | 200 | - | - | 650 | 17 | 341 | 0.02 × 10⁻⁶ | Reference example |
| B4 | BC | 9 | Accelerated cooling | 1100 | 850 | 500 | - | - | - | 15 | 363 | 0.03 × 10⁻⁶ | Reference example |
| B5 | BD | 10 | Direct quenching and tempering | 1100 | 850 | 200 | - | - | 650 | 26 | 452 | 0.09 × 10⁻⁶ | Reference example |
| B6 | BE | 12 | Reheating, quenching, and tempering | 920 | 850 | 200 | - | - | 650 | 23 | 666 | 0.17 × 10⁻⁶ | Reference example |
| B7 | BE | 12 | Reheating, quenching, and tempering | 750 - | 850 | 200 | - | - | 650 | 8 - | 589 | 1.15 × 10⁻⁶ | Comparativ e example |
| B8 | BF | 25 | Reheating, quenching, and tempering | 920 | 850 | 200 | - | - | 650 | 31 | 667 | 0.31 × 10⁻⁶ | Invention example |
| B9 | BF | 25 | Reheating, quenching, and tempering | 920 | 650 - | 200 | - | - | 650 | 7 | 555 | 1.17 × 10 ⁻⁶ | Comparativ e example |
| B10 | BF | 25 | Reheating, quenching, and tempering | 920 | 850 | 400 - | - | - | 650 | 9 - | 576 | 1.16 × 10⁻⁶ | Comparativ e example |
| B11 | BG | 25 | Reheating, quenching, and tempering | 920 | - | - | 850 | 150 | 650 | 51 | 703 | 0.33 × 10⁻⁶ | Invention example |
| B12 | BG | 25 | Reheating, quenching, and tempering | 920 | - | - | 600 - | 150 | 650 | 9 - | 651 | 1.77 × 10⁻⁶ | Comparativ e example |
| B13 | BG | 25 | Reheating, quenching, and tempering | 920 | - | - | 850 | 400 - | 650 | 7 - | 671 | 2.03 × 10 ⁻⁶ | Comparativ e example |
| B14 | BH | 32 | Reheating, quenching, and tempering | 920 | - | - | 850 | 150 | 650 | 32 | 921 | 0.51 × 10⁻⁶ | Invention example |
| B15 | BH | 32 | Reheating, quenching, and tempering | 920 | - | - - | 850 | 150 | 800 | 6 | 812 | 2.23 × 10⁻⁶ | Comparativ e example |

| | | | | | | | | | | | | | |
|---|---|---|---|---|---|---|---|---|---|---|---|---|---|
| Note 1: The underlines indicate that the values are out of the range of the present invention. | | | | | | | | | | | | | |

### [REFERENCE EXAMPLE 2]

An example of a steel microstructure including martensite with the balance being substantially ferrite, which is not according to the claimed invention, is described below. In this reference example, as in Example 1, a method for producing a steel plate was studied in order to simulate the method for producing a hydrogen line pipe or a method for producing a hydrogen storage tank, and property evaluations of a steel plate were performed in order to simulate the property evaluations of the hydrogen line pipe or the hydrogen storage tank. Specifically, in the case where the production method was accelerated cooling or direct quenching and tempering, production of the hydrogen line pipe was simulated, and, in the case where reheating, quenching, and tempering were performed, production of the hydrogen storage tank was simulated.

Steels MA to MH having the respective chemical compositions shown in Table 3 (Tables 3-1 and 3-2) were each molten and cast into a slab. Some of the slabs were heated to the respective heating temperatures shown in Table 4 and then hot-rolled. The hot-rolled steels were subjected to accelerated cooling (Steel plate Nos. M1 and M4) or direct quenching and tempering (Steel plate Nos. M2 and M5) by performing water cooling under the respective conditions shown in Table 4 to prepare steel plates. The other slabs were, after casting, temporarily formed into steel plates, which were then quenched by water cooling or oil cooling under the respective conditions shown in Table 4 to prepare steel plates (Steel plate Nos. M3 and M6 to M15). That is, reheating, quenching, and tempering were performed. The temperature of each steel plate was measured using a thermocouple placed into the center of the steel plate in the thickness direction. The cooling rates shown in Table 4, at which water cooling or oil cooling was performed, were 20°C/sec. or more and 200°C/sec. or less. In particular, in the case where reheating, quenching, and tempering were performed, the cooling rate was set to 20°C/sec. or more and 100°C/sec. or less both for water cooling and oil cooling.

Table 4 summarizes the martensite area ratio, tensile strength, and fatigue crack propagation rate (m/cycle) in 90-MPa high-pressure hydrogen gas at a stress intensity factor range of 25 MPa·m^{1/2} of each steel plate. A material test and evaluation of material properties were conducted as in Example 1 in the following manner. In the steel plates shown in Table 4, microstructures other than martensite were principally ferrite, and the total area ratio of microstructures other than martensite or ferrite was 2% or less. The targeted fatigue crack propagation rate was 1.0 × 10⁻⁶ (m/cycle) or less, and it was considered that the steel plate had high hydrogen embrittlement resistance when the targeted rate was achieved.

### (a) Microstructure of Steel Plate

A microstructure was caused to appear by performing 3% nital etching. An optical microscope image of a cross section of each steel plate which is parallel to the rolling direction was captured at the 1/4-thickness position at an appropriate magnification of 200 to 400 times. Microstructures were visually distinguished, and the area ratios of the microstructures were determined by an image analysis.

### (b) Tensile Properties

A tensile test conforming to JIS Z2241 was conducted using full-thickness tensile test specimens described in JIS Z2201 (1980), which were taken so that the longitudinal direction (tensile direction) of each specimen was parallel to the rolling direction, in order to make an evaluation.

### (c) Fatigue Crack Propagation Test

A fatigue crack propagation characteristic was examined in the following manner. Compact tension specimens conforming to ASTM E 647 were taken from the respective steel plates so that the loading direction was parallel to the rolling direction. The lengths of fatigue cracks formed in each specimen were measured by a compliance method using a clip gage, and thereby a fatigue crack propagation rate in 90-MPa high-pressure hydrogen gas was determined. The test specimens were prepared by, when the thickness of the steel plate was 10 mm or less, grinding the both surfaces of the steel plate by 0.5 mm so that test specimens having thicknesses of 2 mm, 5 mm, 8 mm, and 9 mm were prepared. When the thickness of the steel plate was other than the above-described thickness, that is, more than 10 mm, a test specimen having a thickness of 10 mm was taken at the t/2 (t: plate thickness) position. Both sides of each test specimen were subjected to mirror polishing. A fatigue crack propagation rate (m/cycle) at a stress intensity factor range ΔK of 25 (MPa·m^{1/2}) , which is a stable growth region in which Paris' law holds, was used as a representative value for evaluation. The targeted fatigue crack propagation rate was 1.0 × 10⁻⁶ (m/cycle) or less.

Steel plate Nos. M1 to M6, M8, M11, and M14 shown in Table 4, which satisfy all of the requirements for chemical composition and production conditions described herein, had a dual-phase microstructure primarily composed of ferrite and martensite, and the area ratio of martensite fell within the range described herein. As summarized in Table 4, these steel plates had a fatigue crack propagation rate of 1.0 × 10⁻⁶ (m/cycle) or less, which confirms that these steel plates had high hydrogen embrittlement resistance in high-pressure hydrogen gas.

On the other hand, in Steel plate No. M7, where the heating temperature was lower than the lower limit of the range described herein (i.e., Acs), both the targeted martensite area ratio and the targeted fatigue crack propagation rate were not achieved. In Steel plate Nos. M9 and M12, where the cooling start temperature (i.e., temperature at which water cooling or oil cooling was started) was lower than the lower limit of the range described herein (i.e., Ar₃), that is, out of the range described herein, both the targeted martensite area ratio and the targeted fatigue crack propagation rate were not achieved. In Steel plate Nos. M10 and M13, where the cooling stop temperature (i.e., temperature at which water cooling or oil cooling was stopped) was higher than the upper limit of the range described herein (i.e., 250°C), that is, out of the range described herein, both the targeted martensite area ratio and the targeted fatigue crack propagation rate were not achieved. In Steel plate No. M15, where the tempering temperature was higher than the upper limit of the range described herein (i.e., Ac₁) , that is, out of the range described herein, both the desired martensite area ratio and the desired fatigue crack propagation rate were not achieved. However, Steel plate Nos. M7, M9, M10, M12, M13, and M15, which are shown as comparative examples, also had a dual-phase microstructure primarily composed of ferrite and martensite.

As is clear from the above-described results, in examples described herein, the fatigue crack propagation rate was 1.0 × 10⁻⁶ (m/cycle) or less and a good hydrogen embrittlement characteristic was achieved. This confirms that a steel structure for hydrogen gas such as a hydrogen storage tank or a hydrogen line pipe which has high hydrogen embrittlement resistance can be produced.

### [Table 3-1]

**Table 3-1**

| Steel type | Composition (mass%) | | | | | | | |
|---|---|---|---|---|---|---|---|---|
| | C | Si | Mn | Al | N | P | S | O |
| MA | 0.05 | 0.24 | 0.97 | 0.031 | 0.0034 | 0.021 | 0.0011 | 0.0038 |
| MB | 0.08 | 0.35 | 1.51 | 0.033 | 0.0041 | 0.017 | 0.0007 | 0.0041 |
| MC | 0.10 | 0.21 | 0.69 | 0.026 | 0.0035 | 0.010 | 0.0016 | 0.0032 |
| MD | 0.12 | 0.32 | 0.87 | 0.030 | 0.0036 | 0.006 | 0.0012 | 0.0031 |
| ME | 0.15 | 0.22 | 0.58 | 0.033 | 0.0039 | 0.008 | 0.0026 | 0.0032 |
| MF | 0.19 | 0.36 | 0.78 | 0.062 | 0.0030 | 0.006 | 0.0011 | 0.0040 |
| MG | 0.21 | 0.41 | 1.15 | 0.056 | 0.0033 | 0.012 | 0.0007 | 0.0026 |
| MH | 0.33 | 0.46 | 1.89 | 0.067 | 0.0035 | 0.017 | 0.0018 | 0.0044 |

### [Table 3-2]

**Table 3-2**

| Steel type | Composition (mass%) | | | | | | | | | | | | | Ac₃ (°C) | Ar₃ (°C) | Ac₁ (°C) |
|---|---|---|---|---|---|---|---|---|---|---|---|---|---|---|---|---|
| | Cu | Ni | Cr | Mo | Nb | V | Ti | B | Nd | W | Ca | Mg | REM | | | |
| MA | - | - | - | - | - | - | - | - | - | - | - | - | - | 842 | 817 | 715 |
| MB | - | - | - | - | - | - | - | - | - | - | - | - | - | 834 | 764 | 710 |
| MC | - | - | 0.75 | - | 0.019 | - | 0.014 | 0.0009 | - | - | - | - | - | 834 | 813 | 735 |
| MD | - | - | 0.51 | 0.15 | 0.023 | - | 0.012 | 0.0011 | - | - | - | - | - | 833 | 784 | 730 |
| ME | - | - | 0.87 | 0.55 | 0.032 | 0.041 | 0.008 | - | - | - | - | - | - | 827 | 760 | 740 |
| MF | - | - | 0.77 | 0.32 | 0.018 | 0.055 | - | - | - | - | - | - | - | 823 | 752 | 738 |
| MG | 0.51 | 1.28 | 0.61 | 0.41 | 0.020 | 0.042 | 0.013 | 0.0012 | - | - | - | - | - | 794 | 630 | 712 |
| MH | - | - | 2.12 | 0.68 | 0.023 | 0.082 | 0.016 | 0.0009 | 0.016 | 0.12 | 0.0008 | 0.0006 | 0.0005 | 785 | 570 | 756 |

| | | | | | | | | | | | | | | | | |
|---|---|---|---|---|---|---|---|---|---|---|---|---|---|---|---|---|
| Note 1: Ac₃(°C)=854-180C+44Si-14Mn-17.8Ni-1.7Cr, where the symbols of elements represent the contents (mass%) of the respective elements. Note 2: Ar₃(°C)=910-310C-80Mn-20Cu-15Cr-55Ni-80Mo, where the symbols of elements represent the contents (mass%) of the respective elements. Note 3: Ac,(°C)=723-14Mn+22Si-14.4Ni+23.3Cr, where the symbols of elements represent the contents (mass%) of the respective elements. | | | | | | | | | | | | | | | | |

### [Table 4]

**Table 4**

| Steel plate No. | Steel type | Thickness (mm) | Production method | Heating temperature (°C) | Water-cooling start temperature (°C) | Water-cooling stop temperature (°C) | Oil-cooling start temperature (°C) | Oil-cooling stop temperature (°C) | Tempering temperature (°C) | Martensite area ratio (%) | Tensile strength (MPa) | Fatigue crack propagation rate (m/cycle) | Remark |
|---|---|---|---|---|---|---|---|---|---|---|---|---|---|
| M1 | MA | 3 | Accelerated cooling | 1100 | 900 | 550 | - | - | - | 15 | 417 | 0.06 × 10⁻⁶ | Reference example |
| M2 | MB | 6 | Direct quenching and tempering | 1100 | 900 | 200 | - | - | 650 | 21 | 442 | 0.08 × 10⁻⁶ | Reference example |
| M3 | MB | 6 | Reheating, quenching, and tempering | 920 | 850 | 200 | - | - | 650 | 17 | 431 | 0.07 × 10⁻⁶ | Reference example |
| M4 | MC | 9 | Accelerated cooling | 1100 | 850 | 500 | - | - | - | 12 | 451 | 0.09 × 10⁻⁶ | Reference example |
| M5 | MD | 10 | Direct quenching and tempering | 1100 | 850 | 200 | - | - | 650 | 23 | 546 | 0.12 × 10⁻⁶ | Reference example |
| M6 | ME | 12 | Reheating, quenching, and tempering | 920 | 850 | 200 | - | - | 650 | 21 | 731 | 0.23 × 10⁻⁶ | Reference example |
| M7 | ME | 12 | Reheating, quenching, and tempering | 750 | 850 | 200 | - | - | 650 | 6 | 661 | 1.20 × 10⁻⁶ | Comparative example |
| M8 | MF | 25 | Reheating, quenching, and tempering | 920 | 850 | 200 | - | - | 650 | 27 | 758 | 0.46 × 10⁻⁶ | Reference example |
| M9 | MF | 25 | Reheating, quenching, and tempering | 920 | 650 | 200 | - | - | 650 | 5 - | 651 | 1.31 × 10⁻⁶ | Comparative example |
| M10 | MF | 25 | Reheating, quenching, and tempering | 920 | 850 | 400 - | - | - | 650 | 3 - | 666 | 1.23 × 10⁻⁶ | Comparative example |
| M11 | MG | 25 | Reheating, quenching, and tempering | 920 | - | - | 850 | 150 | 650 | 37 | 791 | 0.56 × 10⁻⁶ | Reference example |
| M12 | MG | 25 | Reheating, quenching, and tempering | 920 | - | - | 600 - | 150 | 650 | 7 - | 732 | 1.92 × 10⁻⁶ | Comparative example |
| M13 | MG | 25 | Reheating, quenching, and tempering | 920 | - | - | 850 | 400 - | 650 | 5 - | 751 | 2.22 × 10⁻⁶ | Comparative example |
| M14 | MH | 32 | Reheating, quenching, and tempering | 920 | - | - | 850 | 150 | 650 | 21 | 998 | 0.68 × 10⁻⁶ | Reference example |
| M15 | MH | 32 | Reheating, quenching, and tempering | 920 | - | - | 850 | 150 | 800 | 5 | 874 | 4.89 × 10⁻⁶ | Comparative example |

| | | | | | | | | | | | | | |
|---|---|---|---|---|---|---|---|---|---|---|---|---|---|
| Note 1: The underlines indicate that the values are out of the range described herein. | | | | | | | | | | | | | |

### [REFERENCE EXAMPLE 3]

An example of a steel microstructure including pearlite with the balance being substantially ferrite, which is not according to the claimed invention, isdescribed below. In this example, as in Example 1, a method for producing a steel plate was studied in order to simulate the method for producing a hydrogen line pipe or a method for producing a hydrogen storage tank, and property evaluations of a steel plate were performed in order to simulate the property evaluations of the hydrogen line pipe or the hydrogen storage tank. Specifically, in the case where the production method was accelerated cooling or direct quenching and tempering, production of the hydrogen line pipe was simulated, and, in the case where reheating, quenching, and tempering were performed, production of the hydrogen storage tank was simulated.

Steels PA to PH having the respective chemical compositions shown in Table 5 (Tables 5-1 and 5-2) were each molten and cast into a slab. Some of the slabs were heated to the respective heating temperatures shown in Table 6 and then hot-rolled. The hot-rolled steels were subjected to accelerated cooling (Steel plate Nos. P1 and P4) or direct quenching and tempering (Steel plate Nos. P2 and P5) by performing water cooling under the respective conditions shown in Table 6 to prepare steel plates. The other slabs were, after casting, temporarily formed into steel plates, which were then quenched by water cooling or oil cooling under the respective conditions shown in Table 6 to prepare steel plates (Steel plate Nos. P3 and P6 to P15). That is, reheating, quenching, and tempering were performed. The temperature of each steel plate was measured using a thermocouple placed into the center of the steel plate in the thickness direction. The cooling rates shown in Table 6, at which water cooling or oil cooling was performed, were set to 1°C/sec. or more and less than 5°C/sec. in the case where accelerated cooling was performed and in the case where direct quenching and tempering were performed. In the case where reheating, quenching, and tempering were performed, the cooling rate was set to 0.5°C/sec. or more and less than 5°C/sec.

Table 6 summarizes the pearlite area ratio, tensile strength, and fatigue crack propagation rate (m/cycle) in 90-MPa high-pressure hydrogen gas at a stress intensity factor range of 25 MPa·m^{1/2} of each steel plate. A material test and evaluation of material properties were conducted as in Example 1 in the following manner. In the steel plates shown in Table 6, microstructures other than pearlite were principally ferrite, and the total area ratio of microstructures other than pearlite or ferrite was 2% or less. The targeted fatigue crack propagation rate was 1.0 × 10⁻⁶ (m/cycle) or less, and it was considered that the steel plate had high hydrogen embrittlement resistance when the targeted rate was achieved.

### (a) Microstructure of Steel Plate

A microstructure was caused to appear by performing 3% nital etching. An optical microscope image of a cross section of each steel plate which is parallel to the rolling direction was captured at the 1/4-thickness position at an appropriate magnification of 200 to 400 times. Microstructures were visually distinguished, and the area ratios of the microstructures were determined by an image analysis.

### (b) Tensile Properties

A tensile test conforming to JIS Z2241 was conducted using full-thickness tensile test specimens described in JIS Z2201 (1980), which were taken so that the longitudinal direction (tensile direction) of each specimen was parallel to the rolling direction, in order to make an evaluation.

### (c) Fatigue Crack Propagation Test

A fatigue crack propagation characteristic was examined in the following manner. Compact tension specimens conforming to ASTM E 647 were taken from the respective steel plates so that the loading direction was parallel to the rolling direction. The lengths of fatigue cracks formed in each specimen were measured by a compliance method using a clip gage, and thereby a fatigue crack propagation rate in 90-MPa high-pressure hydrogen gas was determined. The test specimens were prepared by, when the thickness of the steel plate was 10 mm or less, grinding the both surfaces of the steel plate by 0.5 mm so that test specimens having thicknesses of 2 mm, 5 mm, 8 mm, and 9 mm were prepared. When the thickness of the steel plate was other than the above-described thickness, that is, more than 10 mm, a test specimen having a thickness of 10 mm was taken at the t/2 (t: plate thickness) position. Both sides of each test specimen were subjected to mirror polishing. A fatigue crack propagation rate (m/cycle) at a stress intensity factor range ΔK of 25 (MPa·m^{1/2}) , which is a stable growth region in which Paris' law holds, was used as a representative value for evaluation. The targeted fatigue crack propagation rate was 1.0 × 10⁻⁶ (m/cycle) or less.

Steel plate Nos. P1 to P6, P8, P11, and P14 shown in Table 6, which satisfy all of the requirements for chemical composition and production conditions described herein, had a dual-phase microstructure primarily composed of ferrite and pearlite, and the area ratio of pearlite fell within the range described herein. As summarized in Table 6, these steel plates had a fatigue crack propagation rate of 1.0 × 10⁻⁶ (m/cycle) or less, which confirms that these steel plates had high hydrogen embrittlement resistance in high-pressure hydrogen gas.

On the other hand, in Steel plate No. P7, where the heating temperature was lower than the lower limit of the range described herein (i.e., Acs), both the targeted pearlite area ratio and the targeted fatigue crack propagation rate were not achieved. In Steel plate Nos. P9 and P12, where the cooling start temperature (i.e., temperature at which water cooling or oil cooling was started) was lower than the lower limit of the range described herein (i.e., Ar₃), that is, out of the range described herein, both the targeted pearlite area ratio and the targeted fatigue crack propagation rate were not achieved. In Steel plate Nos. P10 and P13, where the cooling stop temperature (i.e., temperature at which water cooling or oil cooling was stopped) was higher than the upper limit of the range described herein (i.e., 250°C), that is, out of the range described herein, both the targeted pearlite area ratio and the targeted fatigue crack propagation rate were not achieved. In Steel plate No. P15, where the tempering temperature was higher than the upper limit of the range described herein (i.e., Ac₁) , that is, out of the range described herein, both the desired pearlite area ratio and the desired fatigue crack propagation rate were not achieved. However, Steel plate Nos. P7, P9, P10, P12, P13, and P15, which are shown as comparative examples, also had a dual-phase microstructure primarily composed of ferrite and pearlite.

As is clear from the above-described results, in Invention examples, the fatigue crack propagation rate was 1.0 × 10⁻⁶ (m/cycle) or less and a good hydrogen embrittlement characteristic was achieved. This confirms that a steel structure for hydrogen gas such as a hydrogen storage tank or a hydrogen line pipe which has high hydrogen embrittlement resistance can be produced.

### [Table 5-1]

**Table 5-1**

| Steel type | Composition (mass%) | | | | | | | |
|---|---|---|---|---|---|---|---|---|
| | C | Si | Mn | Al | N | P | S | O |
| PA | 0.05 | 0.15 | 0.89 | 0.028 | 0.0035 | 0.016 | 0.0021 | 0.0032 |
| PB | 0.06 | 0.23 | 1.55 | 0.034 | 0.0041 | 0.027 | 0.0042 | 0.0041 |
| PC | 0.05 | 0.18 | 0.71 | 0.031 | 0.0032 | 0.008 | 0.0014 | 0.0028 |
| PD | 0.06 | 0.32 | 0.92 | 0.029 | 0.0034 | 0.006 | 0.0009 | 0.0032 |
| PE | 0.06 | 0.22 | 0.62 | 0.033 | 0.0037 | 0.008 | 0.0022 | 0.0034 |
| PF | 0.07 | 0.32 | 0.77 | 0.059 | 0.0029 | 0.005 | 0.0012 | 0.0041 |
| PG | 0.08 | 0.44 | 1.23 | 0.028 | 0.0033 | 0.011 | 0.0009 | 0.0029 |
| PH | 0.10 | 0.46 | 1.52 | 0.027 | 0.0035 | 0.017 | 0.0021 | 0.0041 |

### [Table 5-2]

**Table 5-2**

| Steel type | Composition (mass%) | | | | | | | | | | | | | Ac₃ (°C) | Ar₃ (°C) | Ac₁ (°C) |
|---|---|---|---|---|---|---|---|---|---|---|---|---|---|---|---|---|
| | Cu | Ni | Cr | Mo | Nb | V | Ti | B | Nd | W | Ca | Mg | REM | | | |
| PA | - | - | - | - | - | - | - | - | - | - | - | - | - | 839 | 823 | 714 |
| PB | - | - | - | - | - | - | - | - | - | - | - | - | - | 832 | 767 | 706 |
| PC | - | - | 0.81 | - | - | - | 0.006 | - | - | - | - | - | - | 842 | 826 | 736 |
| PD | - | - | 0.51 | 0.11 | - | - | - | - | - | - | - | - | - | 844 | 801 | 729 |
| PE | - | - | 0.79 | 0.06 | - | - | 0.006 | - | - | - | - | - | - | 843 | 825 | 738 |
| PF | - | - | 0.77 | 0.12 | 0.016 | 0.025 | - | - | - | - | - | - | - | 843 | 806 | 737 |
| PG | 0.53 | 0.79 | 0.65 | 0.07 | 0.019 | 0.026 | 0.015 | - | - | - | - | - | - | 827 | 717 | 719 |
| PH | - | - | 1.25 | 0.23 | 0.023 | 0.032 | 0.016 | 0.0006 | 0.005 | 0.06 | 0.0007 | 0.0006 | 0.0006 | 833 | 720 | 741 |

| | | | | | | | | | | | | | | | | |
|---|---|---|---|---|---|---|---|---|---|---|---|---|---|---|---|---|
| Note 1: Ac₃(°C)=854-180C+44Si-14Mn-17.8Ni-1.7Cr, where the symbols of elements represent the contents (mass%) of the respective elements. Note 2: Ar₃(°C)=910-310C-80Mn-20Cu-15Cr-55Ni-80Mo, where the symbols of elements represent the contents (mass%) of the respective elements. Note 3: Ac₁(°C)=723-14Mn+22Si-14.4Ni+23.3Cr, where the symbols of elements represent the contents (mass%) of the respective elements. | | | | | | | | | | | | | | | | |

### [Table 6]

**Table 6**

| No. | Steel type | Thickne ss (mm) | Production method | Heating temperatu re (°C) | Water-cooling start temperatur e (°C) | Water-cooling stop temperatu re (°C) | Oil-cooling start temperatu re(°C) | Oil-cooling stop temperatu re (°C) | Temperin 9 temperatu re (°C) | Pearlit e area ratio (%) | Tensile strengt h (MPa) | Fatigue crack propagatio n rate (m/cycle) | Remark |
|---|---|---|---|---|---|---|---|---|---|---|---|---|---|
| P1 | PA | 3 | Accelerated cooling | 1100 | 900 | 550 | - | - | - | 12 | 289 | 0.008 × 10⁻⁶ | Reference example |
| P2 | PB | 6 | Direct quenching and tempering | 1100 | 900 | 200 | - | - | 650 | 15 | 305 | 0.01 × 10⁻⁶ | Reference example |
| P3 | PB | 6 | Reheating, quenching, and tempering | 920 | 850 | 200 | - | - | 650 | 14 | 303 | 0.01 × 10⁻⁶ | Reference example |
| P4 | PC | 9 | Accelerated cooling | 1100 | 850 | 500 | - | - | - | 15 | 313 | 0.01 × 10⁻⁶ | Reference example |
| P5 | PD | 10 | Direct quenching and tempering | 1100 | 850 | 200 | - | - | 650 | 14 | 402 | 0.05 × 10⁻⁶ | Reference example |
| P6 | PE | 12 | Reheating, quenching, and tempering | 920 | 850 | 200 | - | - | 650 | 13 | 616 | 0.12 × 10⁻⁶ | Reference example |
| P7 | PE | 12 | Reheating, quenching, and tempering | 750 | 850 | 200 | - - | - | 650 | 8 | 539 | 1.07 × 10⁻⁶ | Comparative example |
| P8 | PF | 25 | Reheating, quenching, and tempering | 920 | 850 | 200 | - | - | 650 | 16 | 617 | 0.17 × 10⁻⁶ | Reference example |
| P9 | PF | 25 | Reheating, | 920 | 650 | 200 | - | - | 650 | 6 | 505 | 1.09 × 10⁻⁶ | Comparative |
| | | | quenching, and tempering | | | | | | | | | | example |
| P10 | PF | 25 | Reheating, quenching, and tempering | 920 | 850 | 400 | - | - | 650 | 7 | 526 | 1.11 × 10⁻⁶ | Comparative example |
| P11 | PG | 25 | Reheating, quenching, and tempering | 920 | - | - | 850 | 150 | 650 | 21 | 653 | 0.26 × 10⁻⁶ | Reference example |
| P12 | PG | 25 | Reheating, quenching, and tempering | 920 | - | - | 600 | 150 | 650 | 8 | 601 | 1.42 × 10⁻⁶ | Comparative example |
| P13 | PG | 25 | Reheating, quenching, and tempering | 920 | - | - | 850 | 400 | 650 | 6 | 621 | 1.87 × 10⁻⁶ | Comparative example |
| P14 | PH | 32 | Reheating, quenching, and tempering | 920 | - | - | 850 | 150 | 650 | 12 | 871 | 0.46 × 10⁻⁶ | Reference example |
| P15 | PH | 32 | Reheating, quenching, and tempering | 920 | - | - | 850 | 150 | 800 | 5 | 762 | 2.02 × 10⁻⁶ | Comparative example |

| | | | | | | | | | | | | | |
|---|---|---|---|---|---|---|---|---|---|---|---|---|---|
| Note 1: The underlines indicate that the values are out of the range of described herein. | | | | | | | | | | | | | |

## Claims

1. A method for producing a steel structure for hydrogen gas, the steel structure being a hydrogen line pipe having a fatigue crack propagation rate of 1.0 × 10⁻⁶ m/cycle or less in 90-MPa high-pressure hydrogen gas at a stress intensity factor range ΔK of 25 MPa·m^{1/2} and comprising a steel microstructure, wherein:
30% to 70% of bainite on an area-ratio basis with the balance being ferrite in such a manner that the total area ratio of bainite and ferrite is 98% or more, with a steel composition consisting of, by mass, C: 0.05% to 0.20%, Si: 0.05% to 0.50%, Mn: 0.5% to 2.0%, Al: 0.01% to 0.10%, N: 0.0005% to 0.008%, P: 0.05% or less, S: 0.01% or less, and O: 0.01% or less, optionally one or more elements selected from Cu: 0.05% to 1.0%, Ni: 0.05% to 2.0%, Cr: 0.1% to 2.5%, Mo: 0.05% to 2.0%, Nb: 0.005% to 0.1%, V: 0.005% to 0.2%, Ti: 0.005% to 0.1%, W: 0.05% to 2.0%, and B: 0.0005% to 0.005%, and optionally one or more elements selected from Nd: 0.005% to 1.0%, Ca: 0.0005% to 0.005%, Mg: 0.0005% to 0.005%, and REM: 0.0005% to 0.005%, with the balance being Fe and inevitable impurities, the method comprising heating a steel material having the said steel composition to an Acs transformation temperature or more, followed by hot rolling; performing quenching from an Ar₃ transformation temperature or more to 250°C or less at a cooling rate of 5°C/sec. or more and less than 20°C/sec; and subsequently performing tempering at an Ac₁ transformation temperature or less, wherein the temperatures are measured at the center of a steel material, that is the center of the steel material in the thickness direction and the cooling rate is an average cooling rate measured at the center of the steel plate or the steel pipe in the thickness direction, and wherein the fatigue crack propagation rate and microstructure are determined utilizing the methods described in the description.

2. A method for producing a steel structure for hydrogen gas, the steel structure being a hydrogen storage tank having a fatigue crack propagation rate of 1.0 × 10⁻⁶ m/cycle or less in 90-MPa high-pressure hydrogen gas at a stress intensity factor range ΔK of 25 MPa·m^{1/2} and comprising a steel microstructure, wherein:
30% to 70% of bainite on an area-ratio basis with the balance being ferrite in such a manner that the total area ratio of bainite and ferrite is 98% or more, with a steel composition consisting of, by mass, C: 0.05% to 0.20%, Si: 0.05% to 0.50%, Mn: 0.5% to 2.0%, Al: 0.01% to 0.10%, N: 0.0005% to 0.008%, P: 0.05% or less, S: 0.01% or less, and O: 0.01% or less, optionally one or more elements selected from Cu: 0.05% to 1.0%, Ni: 0.05% to 2.0%, Cr: 0.1% to 2.5%, Mo: 0.05% to 2.0%, Nb: 0.005% to 0.1%, V: 0.005% to 0.2%, Ti: 0.005% to 0.1%, W: 0.05% to 2.0%, and B: 0.0005% to 0.005%, and optionally one or more elements selected from Nd: 0.005% to 1.0%, Ca: 0.0005% to 0.005%, Mg: 0.0005% to 0.005%, and REM: 0.0005% to 0.005%, with the balance being Fe and inevitable impurities, the method comprising forming a steel material having the said steel composition into a predetermined shape, followed by heating to an Acs transformation temperature or more; performing quenching from an Ar₃ transformation temperature or more to 250°C or less at a cooling rate of 5°C/sec or more and less than 20°C/sec; and subsequently performing tempering at an Ac₁ transformation temperature or less, wherein the temperatures are measured at the center of a steel material, that is the center of the steel material in the thickness direction and the cooling rate is an average cooling rate measured at the center of the wall of the storage tank in the wall thickness direction, and wherein the fatigue crack propagation rate and microstructure are determined utilizing the methods described in the description.

## Patentansprüche

1. Verfahren zur Herstellung einer Stahlkonstruktion für Wasserstoffgas, wobei die Stahlkonstruktion ein Wasserstoffleitungsrohr mit einer Ermüdungsrissausbreitungsrate von 1,0 × 10⁻⁶ m/Zyklus oder weniger in 90 MPa-Hochdruck-Wasserstoffgas bei einem Spannungsintensitätsfaktorbereich ΔK von 25 MPa·m^{1/2} aufweist und eine Stahlmikrostruktur umfasst, wobei:
30 bis 70 % Bainit, bezogen auf das Flächenverhältnis, wobei der Rest Ferrit ist, sodass das Gesamtflächenverhältnis von Bainit und Ferrit 98 % oder mehr beträgt, mit einer Stahlzusammensetzung, die gewichtsmäßig besteht aus C: 0,05 % bis 0,20 %, Si: 0,05 % bis 0,50 %, Mn: 0,5 % bis 2,0 %, Al: 0,01 % bis 0,10 %, N: 0,0005 % bis 0,008 %, P: 0,05 % oder weniger, S: 0,01 % oder weniger und O: 0,01 % oder weniger, optional einem oder mehreren Elementen ausgewählt aus Cu: 0,05 % bis 1,0 %, Ni: 0,05 % bis 2,0 %, Cr: 0,1 % bis 2,5 %, Mo: 0,05 % bis 2,0 %, Nb: 0,005 % bis 0,1 %, V: 0,005 % bis 0,2 %, Ti: 0,005 % bis 0,1 %, W: 0,05 % bis 2,0 % und B: 0,0005 % bis 0,005 % und optional einem oder mehreren Elemente ausgewählt aus Nd: 0,005 % bis 1,0 %, Ca: 0,0005 % bis 0,005 %, Mg: 0,0005 % bis 0,005 % und REM: 0,0005 % bis 0,005 %, wobei der Rest Fe und unvermeidliche Verunreinigungen ist, wobei das Verfahren Erhitzen eines Stahlmaterials mit der Stahlzusammensetzung auf eine Acs-Umwandlungstemperatur oder höher umfasst, gefolgt von Warmwalzen; Durchführen eines Abschreckens von einer Ar₃-Umwandlungstemperatur oder höher auf 250 °C oder niedriger mit einer Abkühlgeschwindigkeit von 5 °C/Sek oder mehr und weniger als 20°C/Sek; und anschließendes Durchführen eines Anlassens bei einer Ac₁-Umwandlungstemperatur oder niedriger, wobei die Temperaturen in der Mitte eines Stahlmaterials gemessen werden, d. h. in der Mitte des Stahlmaterials in der Dickenrichtung, und die Abkühlrate eine durchschnittliche Abkühlrate ist, die in der Mitte der Stahlplatte oder des Stahlrohrs in der Dickenrichtung gemessen wird, und wobei die Ermüdungsrissausbreitungsrate und die Mikrostruktur unter Verwendung der in der Beschreibung beschriebenen Verfahren bestimmt werden.

2. Verfahren zur Herstellung einer Stahlkonstruktion für Wasserstoffgas, wobei die Stahlkonstruktion einen Wasserstoffspeichertank mit einer Ermüdungsrissausbreitungsrate von 1,0 × 10⁻⁶ m/Zyklus oder weniger in 90 MPa-Hochdruck-Wasserstoffgas bei einem Spannungsintensitätsfaktor ΔK von 25 MPa·m^{1/2} aufweist und eine Stahlmikrostruktur umfasst, wobei:
30 bis 70 % Bainit, bezogen auf das Flächenverhältnis, wobei der Rest Ferrit ist, sodass das Gesamtflächenverhältnis von Bainit und Ferrit 98 % oder mehr beträgt, mit einer Stahlzusammensetzung, die gewichtsmäßig besteht aus C: 0,05 % bis 0,20 %, Si: 0,05 % bis 0,50 %, Mn: 0,5 % bis 2,0 %, Al: 0,01 % bis 0,10 %, N: 0,0005 % bis 0,008 %, P: 0,05 % oder weniger, S: 0,01 % oder weniger und O: 0,01 % oder weniger, optional einem oder mehreren Elementen ausgewählt aus Cu: 0,05 % bis 1,0 %, Ni: 0,05 % bis 2,0 %, Cr: 0,1 % bis 2,5 %, Mo: 0,05 % bis 2,0 %, Nb: 0,005 % bis 0,1 %, V: 0,005 % bis 0,2 %, Ti: 0,005 % bis 0,1 %, W: 0,05 % bis 2,0 % und B: 0,0005 % bis 0,005 % und optional einem oder mehreren Elemente ausgewählt aus Nd: 0,005 % bis 1,0 %, Ca: 0,0005 % bis 0,005 %, Mg: 0,0005 % bis 0,005 % und REM: 0,0005 % bis 0,005 %, wobei der Rest Fe und unvermeidliche Verunreinigungen ist, wobei das Verfahren Ausformen eines Stahlmaterials mit der Stahlzusammensetzung in eine vorbestimmte Form umfasst, gefolgt von Erhitzen auf eine Acs-Umwandlungstemperatur oder höher; Durchführen eines Abschreckens von einer Ars-Umwandlungstemperatur oder höher auf 250 °C oder niedriger mit einer Abkühlgeschwindigkeit von 5 °C/Sek oder mehr und weniger als 20°C/Sek; und anschließendes Durchführen eines Anlassens bei einer Ac₁-Umwandlungstemperatur oder niedriger, wobei die Temperaturen in der Mitte eines Stahlmaterials gemessen werden, d. h. in der Mitte des Stahlmaterials in der Dickenrichtung, und die Abkühlrate eine durchschnittliche Abkühlrate ist, die in der Mitte der Wand des Speichertanks in der Wanddickenrichtung gemessen wird, und wobei die Ermüdungsrissausbreitungsrate und die Mikrostruktur unter Verwendung der in der Beschreibung beschriebenen Verfahren bestimmt werden.

## Revendications

1. Procédé de production d'une structure en acier pour l'hydrogène gazeux, la structure en acier étant un tuyau de conduite d'hydrogène ayant une vitesse de propagation de fissure de fatigue de 1,0 × 10⁻⁶ m/cycle ou moins dans de l'hydrogène gazeux haute pression à 90-MPa à une plage de facteur d'intensité de contrainte ΔK de 25 MPa·m^{1/2} et comprenant une microstructure d'acier, où :
30 % à 70 % de bainite sur une base de rapport de surface, le reste étant de la ferrite de telle manière que le rapport de surface total de bainite et de ferrite soit de 98 % ou plus, avec une composition d'acier consistant en, en masse, C : 0,05 % à 0,20 %, Si : 0,05 % à 0,50 %, Mn : 0,5 % à 2,0 %, Al : 0,01 % à 0,10 %, N : 0,0005 % à 0,008 %, P : 0,05 % ou moins, S : 0,01 % ou moins, et O : 0,01 % ou moins, éventuellement un ou plusieurs éléments choisis parmi Cu : 0,05 % à 1,0 %, Ni : 0,05 % à 2,0 %, Cr : 0,1 % à 2,5 %, Mo : 0,05 % à 2,0 %, Nb : 0, 005 % à 0,1 %, V : 0, 005 % à 0,2 %, Ti : 0,005 % à 0,1 %, W : 0,05 % à 2,0 %, et B : 0,0005 % à 0,005 %, et éventuellement un ou plusieurs éléments choisis parmi Nd : 0,005 % à 1,0 %, Ca : 0,0005 % à 0,005 %, Mg : 0,0005 % à 0,005 %, et un métal de terre rare (REM) : 0,0005 % à 0,005 %, le reste étant Fe et des impuretés inévitables, le procédé comprenant le chauffage d'un matériau en acier ayant ladite composition d'acier à une température de transformation supérieure ou égale à Ac₃, suivi d'un laminage à chaud ; la réalisation d'une trempe d'une température de transformation supérieure ou égale à Ar₃ jusqu'à une température inférieure ou égale à 250 °C à une vitesse de refroidissement supérieure ou égale à 5 °C/sec et inférieure à 20 °C/sec ; et la réalisation ensuite d'un revenu à une température de transformation inférieure ou égale à Ac₁, dans lequel les températures sont mesurées au centre d'un matériau en acier, c'est-à-dire au centre du matériau en acier dans le sens de l'épaisseur et la vitesse de refroidissement est une vitesse de refroidissement moyenne mesurée au centre de la plaque d'acier ou du tuyau d'acier dans le sens de l'épaisseur, et dans lequel la vitesse de propagation de fissure de fatigue et la microstructure sont déterminées en utilisant les procédés décrits dans la description.

2. Procédé de production d'une structure en acier pour l'hydrogène gazeux, la structure en acier étant un réservoir de stockage d'hydrogène ayant une vitesse de propagation de fissure de fatigue de 1,0 × 10⁻⁶ m/cycle ou moins dans de l'hydrogène gazeux haute pression à 90-MPa à une plage de facteur d'intensité de contrainte ΔK de 25 MPa·m^{1/2} et comprenant une microstructure d'acier, où :
30 % à 70 % de bainite sur une base de rapport de surface, le reste étant de la ferrite de telle manière que le rapport de surface total de bainite et de ferrite soit de 98 % ou plus, avec une composition d'acier consistant en, en masse, C : 0,05 % à 0,20 %, Si : 0,05 % à 0,50 %, Mn : 0,5 % à 2,0 %, Al : 0,01 % à 0,10 %, N : 0,0005 % à 0,008 %, P : 0,05 % ou moins, S : 0,01 % ou moins, et O : 0,01 % ou moins, éventuellement un ou plusieurs éléments choisis parmi Cu : 0,05 % à 1,0 %, Ni : 0,05 % à 2,0 %, Cr : 0,1 % à 2,5 %, Mo : 0,05 % à 2,0 %, Nb : 0, 005 % à 0,1 %, V : 0, 005 % à 0,2 %, Ti : 0,005 % à 0,1 %, W : 0,05 % à 2,0 %, et B : 0,0005 % à 0,005 %, et éventuellement un ou plusieurs éléments choisis parmi Nd : 0,005 % à 1,0 %, Ca : 0,0005 % à 0,005 %, Mg : 0,0005 % à 0,005 %, et REM : 0,0005 % à 0,005 %, le reste étant Fe et des impuretés inévitables, le procédé comprenant la formation d'un matériau en acier ayant ladite composition d'acier en une forme prédéterminée, suivie d'un chauffage à une température de transformation supérieure ou égale à Acs ; la réalisation d'une trempe d'une température de transformation supérieure ou égale à Ar₃ jusqu'à une température inférieure ou égale à 250 °C à une vitesse de refroidissement supérieure ou égale à 5 °C/sec et inférieure à 20 °C/sec ; et la réalisation ensuite d'un revenu à une température de transformation inférieure ou égale à Ac₁, dans lequel les températures sont mesurées au centre d'un matériau en acier, c'est-à-dire au centre du matériau en acier dans le sens de l'épaisseur et la vitesse de refroidissement est une vitesse de refroidissement moyenne mesurée au centre de la paroi du réservoir de stockage dans le sens de l'épaisseur de paroi, et dans lequel la vitesse de propagation de fissure de fatigue et la microstructure sont déterminées en utilisant les procédés décrits dans la description.
